(19) Europäisches Patentamt
European Patent Office
Office européen des brevets

(11) **EP 4 761 236 A1**

(12) **EUROPEAN PATENT APPLICATION**
published in accordance with Art. 153(4) EPC

(43) Date of publication:
**17.06.2026  Bulletin 2026/25**

(21) Application number: **24894310.2**

(22) Date of filing: **16.08.2024**

(51) International Patent Classification (IPC):
*H04N 9/31* (2006.01)

(52) Cooperative Patent Classification (CPC):
**H04N 9/3185; H04N 9/31; H04N 9/3182;
H04N 9/3194**

(86) International application number:
**PCT/KR2024/012224**

(87) International publication number:
**WO 2025/110413 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.11.2023  KR 20230163503**

(71) Applicant: **Samsung Electronics Co., Ltd.
Suwon-si, Gyeonggi-do 16677 (KR)**

(72) Inventors:
• **KIM, Jiman
Suwon-si Gyeonggi-do 16677 (KR)**
• **PARK, Jaesung
Suwon-si Gyeonggi-do 16677 (KR)**
• **JUNG, Seongwoon
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND CONTROL METHOD THEREFOR**

(57)     An electronic apparatus is disclosed. The electronic apparatus includes: an image projector, a memory storing one or more instructions, and at least one processor comprising processing circuitry operatively connected with the image projector and the memory. At least one processor, individually and/or collectively, is configured to execute the one or more instructions, and is configured to: perform a keystone correction by projecting a test image to a screen, identify screen-based coordinates corresponding to each of a plurality of pixels included in the test image based on the keystone correction, identify a screen-based area corresponding to each of the plurality of pixels based on the identified screen-based coordinates, identify a reference pixel from among the plurality of pixels based on the screen-based area corresponding to each of the plurality of pixels, and identify brightness correcting information corresponding to each of the plurality of pixels based on a screen-based area of the identified reference pixel and a screen-based area of each of the plurality of pixels.

FIG. 3

**Description**

[Technical Field]

The disclosure relates to an electronic apparatus and a control method thereof, and for example, to an electronic apparatus that projects an image and a control method thereof.

[Background Art]

With recent developments in electronic technology and optical technology, various projectors are being utilized. A projector refers to an electronic apparatus that projects light to a screen (or, a projection plane) so as to form an image on the screen.

When an image is projected using the projector, a rectangular image is shown on the screen if the projector is properly placed at an even surface toward a direction of the screen. However, if different from the above, a vertical or horizontal distortion may occur or an image of a rotated state may be shown on the screen. The distortion described above is referred to as a keystone effect.

Accordingly, the projector projected an image on which a keystone correction has been performed on the screen. However, in this case, there has been a problem of a brightness imbalance occurring.

[Disclosure]

[Technical Solution]

According to an example embodiment, an electronic apparatus includes: an image projector, a memory storing one or more instructions, and at least one processor, comprising processing circuitry, operatively connected with the image projector and the memory, wherein at least one processor, individually and/or collectively, is configured to execute the one or more instructions, and to: perform a keystone correction by projecting a test image to a screen, identify screen-based coordinates corresponding to each of a plurality of pixels included in the test image based on the keystone correction, identify a screen-based area corresponding to each of the plurality of pixels based on the identified screen-based coordinates, identify a reference pixel from among the plurality of pixels based on the screen-based area corresponding to each of the plurality of pixels, and identify brightness correcting information corresponding to each of the plurality of pixels based on a screen-based area of the identified reference pixel and a screen-based area of each of the plurality of pixels.

According to an example embodiment, at least one processor, individually and/or collectively, may be configured to identify a value acquired by dividing the screen-based area of each of the plurality of pixels with a screen-based area of the reference pixel as the brightness correcting information corresponding to each of the plurality of pixels.

According to an example embodiment, at least one processor, individually and/or collectively, may be configured to identify a pixel corresponding to a maximum area from among the screen-based area corresponding to each of the plurality of pixels as the reference pixel.

According to an example embodiment, the plurality of screen-based coordinates corresponding to each of the plurality of pixels may include screen-based four vertex coordinates corresponding to four vertices of each of the plurality of pixels included in the test image. At least one processor, individually and/or collectively, may be configured to calculate a screen area of each of the plurality of pixels based on the screen-based four vertex coordinates of each of the plurality of pixels.

According to an example embodiment, at least one processor, individually and/or collectively, may be configured to: identify an area in which a first test image projected at the screen according to the keystone correction and a second test image projected at the screen from an external projector device are overlapped, identify the overlapped area identified on the screen as a plurality of virtual pixel areas, identify projector-based coordinates corresponding to each of the plurality of virtual pixel areas, identify screen-based coordinates corresponding to the identified projector-based coordinates, acquire third brightness information corresponding to each of the plurality of virtual pixel areas based on first brightness information corresponding to the identified screen-based coordinates and second brightness information corresponding to the external projector device, and identify first brightness correcting information corresponding to each of the plurality of pixels included in the first test image based on the first brightness information and the third brightness information.

According to an example embodiment, at least one processor, individually and/or collectively, may be configured to: acquire the third brightness information by adding the first brightness information of a first pixel corresponding to the identified screen-based coordinates and the second brightness information corresponding to a second pixel corresponding to the identified screen-based coordinates based on the external projector device.

According to an example embodiment, at least one processor, individually and/or collectively, may be configured to: identify a first pixel area with lowest brightness from among the plurality of virtual pixel areas based on the third brightness information, identify a brightness compensation value corresponding to each of the plurality of virtual pixel areas based on fourth brightness information corresponding to the first pixel area and the first brightness information of each of the plurality of virtual pixel areas, and identify the first brightness correcting information corresponding to each of the plurality of pixels included in the first test image based on the identified brightness compensation value.

According to an example embodiment, an area in which the first test image and the second test image are overlapped may be a quadrangle area of a maximum size identified based on an aspect ratio of the first test image and an aspect ratio of the second test image in an area in which the first test image and the second test image are overlapped.

According to an example embodiment, a communication interface comprising communication circuitry may be further included, and at least one processor, individually and/or collectively, may be configured to: receive the second brightness information from the external projector device through the communication interface, acquire second brightness correcting information corresponding to each of the plurality of pixels included in the second test image based on the second brightness information and the third brightness information, and transmit the acquired second brightness correcting information to the external projector device through the communication interface.

According to an example embodiment, the test image may include a plurality of markers, and at least one processor, individually and/or collectively, may be configured to: acquire third information indicating a vertex area location of the test image in the photographed image based on first information indicating a location of the plurality of markers in the test image and second information indicating a location of the plurality of markers in the photographed image of the screen from an external device, correct the third information based on orientation information of the external device, and perform the keystone correction based on the corrected third information.

According to an example embodiment, a method of controlling an electronic apparatus includes: performing a keystone correction by projecting a test image to a screen, identifying screen-based coordinates corresponding to each of a plurality of pixels included in the test image based on the keystone correction, identifying a screen-based area corresponding to each of the plurality of pixels based on the identified screen-based coordinates, identifying a reference pixel from among the plurality of pixels based on a screen-based area corresponding to each of the plurality of pixels, and identifying brightness correcting information corresponding to each of the plurality of pixels based on a screen-based area of the identified reference pixel and a screen-based area of each of the plurality of pixels.

According to an example embodiment, in a non-transitory computer-readable medium storing computer instructions for an electronic apparatus to perform an operation when executed by at least one processor of the electronic apparatus, individually and/or collectively, the operation including: performing a keystone correction by projecting a test image to a screen, identifying screen-based coordinates corresponding to each of a plurality of pixels included in the test image based on the keystone correction, identifying a screen-based area corresponding to each of the plurality of pixels based on the identified screen-based coordinates, identifying a reference pixel from among the plurality of pixels based on a screen-based area corresponding to each of the plurality of pixels, and identifying brightness correcting information corresponding to each of the plurality of pixels based on a screen-based area of the identified reference pixel and a screen-based area of each of the plurality of pixels.

[Description of Drawings]

The above and other aspects, features, and advantages of certain embodiments of the present disclosure will be more apparent from the following detailed description, taken in conjunction with the accompanying drawings, in which:

FIG. 1A is a diagram illustrating an example keystone correction method and a concept of a coordinate system to aid in the understanding thereof;
FIG. 1B is a diagram illustrating an example keystone correction method and a concept of a coordinate system to aid in the understanding thereof;
FIG. 2 is a block diagram illustrating an example configuration of a projector according to various embodiments;
FIG. 3 is a flowchart illustrating an example method of controlling an electronic apparatus according to various embodiments;
FIG. 4A and FIG. 4B are diagrams illustrating coordinate information according to various embodiments;
FIG. 5 is a diagram illustrating a third coordinate information according to various embodiments;
FIG. 6A is a diagram illustrating an example method of acquiring roll information and pitch information according to various embodiments;
FIG. 6B is a diagram illustrating an example method of acquiring roll information and pitch information according to various embodiments;
FIG. 7 is a diagram illustrating an example method of acquiring yaw information according to various embodiments;
FIG. 8A is a diagram illustrating an example method of acquiring a distance between a user terminal and a screen according to various embodiments;

FIG. 8B is a diagram illustrating an example method of acquiring a distance between a user terminal and a screen according to various embodiments;

FIG. 9 is a diagram illustrating an example method of identifying a quadrangle area of a maximum size according to various embodiments;

FIG. 10 is a diagram illustrating an example projection image based on a keystone correction according to various embodiments;

FIG. 11 is a diagram illustrating a coordinate system relationship according to various embodiments;

FIG. 12 is a diagram illustrating an example method of acquiring a coordinate conversion matrix according to various embodiments ;

FIG. 13 is a diagram illustrating an example method of calculating a width of a quadrangle according to various embodiments;

FIG. 14 is a flowchart illustrating an example method of controlling an electronic apparatus according to various embodiments;

FIG. 15 is a diagram illustrating an example method of calculating correction information in a stack situation according to various embodiments; and

FIG. 16 is a block diagram illustrating an example configuration of an electronic apparatus according to various embodiments.

[Detailed Description of Exemplary Embodiments]

Hereinafter, the disclosure will be described in greater detail with reference to the accompanying drawings.

The terms used in describing the various example embodiments will be briefly explained, and example embodiments will be described in greater detail with reference to the accompanying drawings.

Terms used in the disclosure are selected as general terminologies currently widely used in consideration of the configuration and functions of the disclosure, but may be different depending on intention of those skilled in the art, a precedent, appearance of new technologies, or the like. Further, in specific cases, terms may be arbitrarily selected. In this case, the meaning of the terms will be described in the description of the corresponding embodiments. Accordingly, the terms used in the description should not necessarily be construed as simple names of the terms, but be defined based on meanings of the terms and overall contents of the disclosure.

The terms "have", "may have", "include", and "may include" used in the example embodiments of the present disclosure indicate the presence of corresponding features (for example, elements such as numerical values, functions, operations, or parts), and do not preclude the presence of additional features.

The term "at least one of A or/and B" may refer, for example, to at least one A, including at least one B, or including both at least one A and at least one B.

The term such as "first" and "second" used in various example embodiments may be used to reference various elements regardless of an order and/or importance of the corresponding elements, and does not limit the corresponding elements.

When an element (e.g., a first element) is "operatively or communicatively coupled with/to" or "connected to" another element (e.g., a second element), an element may be directly coupled with another element or may be coupled through the other element (e.g., a third element).

In the description, the term "configured to" may be used interchangeably with, for example, "suitable for", "having the capacity to", "designed to", "adapted to", "made to", or "capable of" under certain circumstances. The term "configured to (set to)" does not necessarily refer to "specifically designed to" in a hardware level.

Singular forms are intended to include plural forms unless the context clearly indicates otherwise. The terms "include", "comprise", "is configured to," etc., of the description are used to indicate that there are features, numbers, steps, operations, elements, parts or combination thereof, and they should not exclude the possibilities of combination or addition of one or more features, numbers, steps, operations, elements, parts or a combination thereof.

In the disclosure, a 'module' or a 'unit' may perform at least one function or operation and may be implemented by hardware or software or a combination of the hardware and the software. In addition, a plurality of 'modules' or a plurality of 'units' may be integrated into at least one module and may be at least one processor except for 'modules' or 'units' that should be realized in a specific hardware.

Hereinafter, various example embodiments of the disclosure will be described in greater detail with reference to the accompanying drawings.

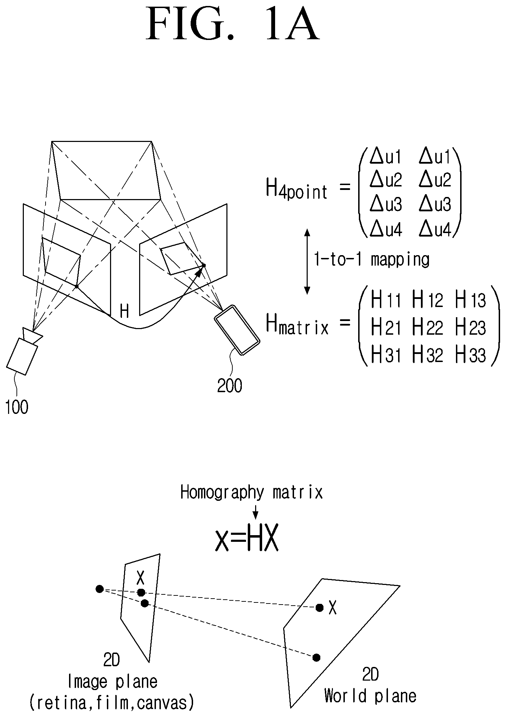

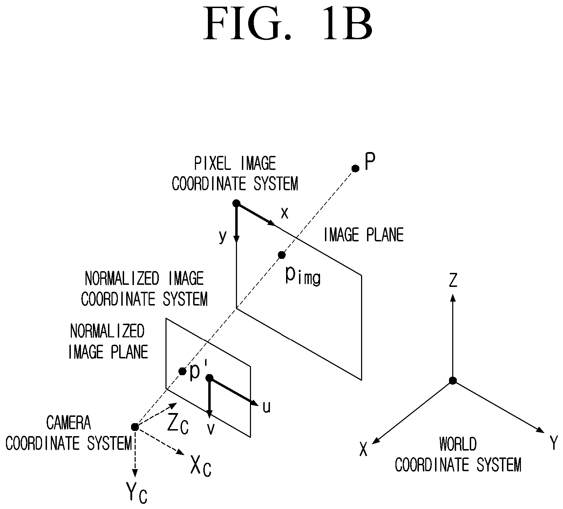

FIGS. 1A and 1B are diagrams illustrating an example of a keystone correction method and a concept of a coordinate system for better understanding.

The electronic apparatus 100 having a function of projecting an image, that is a projector function, shows a relatively accurate ratio of a screen when the projector is located on a straight line with the projection plane, but when this is not satisfied due to space conditions, the electronic apparatus 100 projects a screen that deviates from the projection plane or a rhombus-shaped screen that is distorted up, down, right and left. In this case, a keystone correction may be required. Keystone correction may refer, for example, to a function of adjusting a projected screen to be closer to an original shape of a quadrangle by forcibly moving an edge of the screen to be displayed, that is, to be projected.

According to an embodiment, keystone correction may be performed using a user terminal 200 as illustrated in FIG. 1A. For example, a projection plane 10 on which an image is projected may be photographed using a camera provided in the user terminal 200, and keystone correction may be performed based on the photographed image. A projective transformation may be used. Projective transformation may refer, for example, to a transformation of an image projected from 3D space into 2D space. In other words, it is a method of transforming two images viewed from two different points of view in 3D space. A matrix that represents the relationship between two different images may be called a homography matrix (hereinafter referred to as H matrix). For example, a size of H matrix may be 3x3. Four corresponding pair coordinates may be required to acquire the H matrix. According to an embodiment, the four corresponding pair coordinates may be coordinates on a world coordinate system.

FIG. 1B is a diagram illustrating an example concept of a coordinate system for better understanding.

As illustrated in FIG. 1B, there are four coordinate systems in an image geometry which are a world coordinate system, a camera coordinate system, a normal coordinate system, and a pixel coordinate system. The world coordinate system and the camera coordinate system are three-dimensional coordinate systems, and the normal coordinate system and the pixel coordinate system are two-dimensional coordinate systems.

The world coordinate system is a coordinate system used to represent a location of an object. The world coordinate system is a coordinate system that may be arbitrarily used, for example, an edge of a space may be set as an origin point, a direction of one wall may be set as an X-axis, a direction of the other wall may be set as an Y-axis, and a direction facing the sky may be set as an Z-axis. A point on the world coordinate system may be represented as P (X, Y, Z).

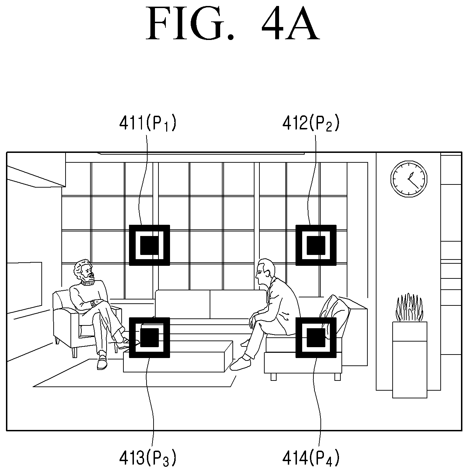

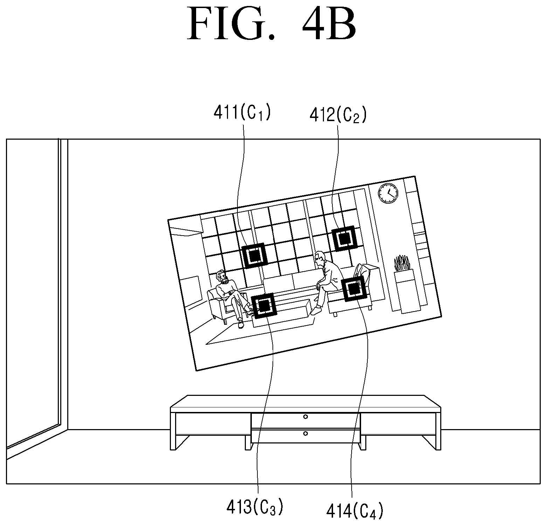

The camera coordinate system is a coordinate system with respect to a camera. As illustrated in FIGS. 4A and 4B, for example, the camera coordinate system may set a focus of the camera (center of a lens) as an origin point, a front optical axis direction of the camera as a Z-axis, a downward direction of the camera as an Y-axis, and a right direction as an X-axis. Points on the camera coordinate system may be represented as Pc (Xc, Yc, Zc).

The pixel image coordinate system may be referred to as an image coordinate system. As illustrated in FIG. 1B, the pixel coordinate system may be a coordinate system for an image viewed by an actual eye, and an upper left edge of the image may be set as an origin point, a right direction as an x-axis increasing direction, and a downward direction as an y-axis increasing direction. A plane determined by the x-axis and y-axis of the pixel coordinate system is called an image plane.

Geometrically, a point P = (X, Y, Z) in 3D space may pass through a focus of a camera (or a focus of a lens) and be projected to a point pimg = (x, y) of an image plane. All 3D points on a ray connecting point P and point pimg may all be projected as pimg. Thus, pimg from the 3D point P may be uniquely determined, but conversely, it may be impossible to acquire P from the image pixel pimg without additional information. A unit of the pixel coordinate system is a pixel, and may be represented as pimg = (x, y).

The normalized coordinate system may refer, for example, to an image coordinate system that eliminates and/or reduces an influence of internal parameters of the camera. In addition, the normalized coordinate system may refer, for example, to a coordinate system in which the units of the coordinate system are removed (normalized) and is a coordinate system that defines a virtual image plane with a distance of 1 from a focus of the camera. In other words, it may be an image plane shifted to a point where a distance from the camera focus is 1 by translating an original image plane in parallel.

An origin point of the normal coordinate system is a midpoint of the image plane (intersection with an optical axis Zc). Points on the normal coordinate system may be represented as p'= (u, v). Even if a same scene is photographed at a same location and a same angle, different images may be acquired depending on a camera used or a camera setting. A normalized image plane may be used since it is more effective to analyze and theorize common geometric characteristics in a normalized image plane that removes these elements described above.

When projecting an image using the projector, the keystone correction may be performed to correct the keystone effect which is generated. However, while the keystone correction adjusts a projection ratio of the screen, there is a problem of not being able to compensate for non-uniformity in brightness of the screen which is inevitably generated when performing the keystone correction.

Accordingly, various embodiments for compensating for the non-uniformity in brightness of the screen will be described in greater detail below.

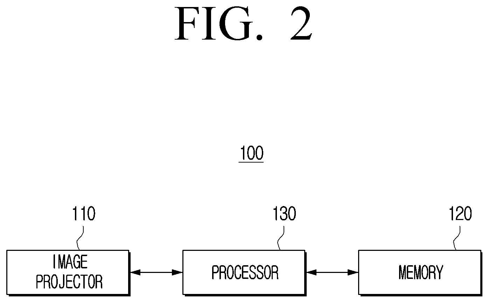

FIG. 2 is a block diagram illustrating an example configuration of an electronic apparatus according to various embodiments.

According to FIG. 2, the electronic apparatus 100 may include an image projector 110, a memory 120 and at least one processor (e.g., including processing circuitry) 130. The electronic apparatus 100 may, for example, be implemented as a projector for projecting an image onto a wall or a projection plane or various types of devices having an image projection function.

The image projector 110 may perform a function of outputting an image to the projection plane by projecting light for representing an image to the outside. Here, the projection plane may be a part of a real world space from which the image is output or a separate projection plane. The image projector 110 may include various detailed configurations such as at least one light source among, for example, and without limitation, a lamp, an LED, and a laser, a projection lens, a reflector, or the like.

The image projector 110 may project an image in one of various projection methods (e.g., a cathode-ray tube (CRT) method, a liquid crystal display (LCD) method, a digital light processing (DLP) method, a laser method, or the like). The image projector 110 may include at least one light source.

The image projector 110 may, for example, and without limitation, output images in 4:3 aspect ratio, 5:4 aspect ratio, 16:9 wide aspect ratio according to a purpose of the electronic apparatus 100 or the user's settings, and may output images in various resolutions such as WVGA (854*480), SVGA (800*600), XGA (1024*768), WXGA (1280*720), WXGA (1280*800), XGA (1280*1024), UXGA (1600*1200), Full HD (1920*1080), or the like.

In addition, the image projector 110 may perform various functions for adjusting a projection image under the control of the electronic apparatus 100. For example, the image projector 110 may perform a zoom function, a lens shift function, or the like.

The memory 120 may store data necessary for the various embodiments. The memory 120 may be implemented in a form of a memory embedded in the electronic apparatus 100 according to a data storage use, or in a form of a memory attachable to or detachable from the electronic apparatus 100. For example, data for the driving of the electronic apparatus 100 may be stored in the memory embedded in the electronic apparatus 100, and data for an expansion function of the electronic apparatus 100 may be stored in the memory attachable to or detachable from the electronic apparatus 100. The memory embedded in the electronic apparatus 100 may be implemented as at least one from among a volatile memory (e.g., a dynamic RAM (DRAM), a static RAM (SRAM), or a synchronous dynamic RAM (SDRAM)), or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)). In addition, the memory attachable to or detachable from an electronic apparatus 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., a USB memory) connectable to a USB port, or the like.

According to an example, the memory 120 may store various information associated with keystone correction, and various information associated with brightness correction. For example, the memory 120 may store various information, for example, a conversion matrix, acquired in a process of performing keystone correction. For example, the memory 120 may store various information, for example, a brightness correction coefficient, acquired in the process of correcting brightness.

The one or more processors 130 may include various processing circuitry and control an overall operation of the electronic apparatus 100. Specifically, the one or more processors 130 may control the overall operation of the electronic apparatus 100 by being connected with each configuration of the electronic apparatus 100. For example, the one or more processors 130 may be operatively connected with the image projector 110 and the memory 120. The processor 130 may be formed of one or a plurality of processors.

The one or more processors 130 may perform, by executing at least one instruction stored in the memory 120, an operation of the electronic apparatus 100 according to various embodiments.

The one or more processors 130 may include one or more from among a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or a random combination from among other elements of the electronic apparatus, and perform an operation associated with communication or data processing. The one or more processors 130 may execute one or more programs or instructions stored in the memory. For example, the one or more processors may perform, by executing the one or more instructions stored in the memory, a method according to various embodiments of the disclosure.

When a method according to various embodiments of the disclosure includes a plurality of operations, the plurality of operations may be performed by one processor, or performed by a plurality of processors. For example, when a first operation, a second operation, and a third operation are performed by a method according to various embodiments, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor).

The one or more processors 130 may be implemented as a single core processor that includes one core, or implemented as one or more multicore processors that includes a plurality of cores (e.g., a homogeneous multicore or a heterogeneous multicore). If the one or more processors 130 are implemented as a multicore processor, each of the plurality of cores included in the multicore processor may include a memory inside the processor such as a cache memory and an on-chip memory, and a common cache shared by the plurality of cores may be included in the multicore processor. In addition, each of the plurality of cores (or a portion from among the plurality of cores) included in the multicore processor may independently read and perform a program command for implementing a method according to various embodiments, or read and perform a program command for implementing a method according to various embodiments of the disclosure due to a whole (or a portion) of the plurality of cores being interconnected.

When a method according to various embodiments of the disclosure includes a plurality of operations, the plurality of operations may be performed by one core from among the plurality of cores or performed by the plurality of cores included in the multicore processor. For example, when a first operation, a second operation, and a third operation are performed by a method according to various embodiments, the first operation, the second operation, and the third operation may all be performed by a first core included in the multicore processor, or the first operation and the second operation may be performed by the first core included in the multicore processor and the third operation may be performed by a second core included in the multicore processor.

In various embodiments of the disclosure, the processor may refer to a system on chip (SoC), a single core processor, or a multicore processor in which the one or more processors and other electronic components are integrated or a core included in the single core processor or the multicore processor, and the core herein may be implemented as the CPU, the GPU, the APU, the MIC, the DSP, the NPU, the hardware accelerator, the machine learning accelerator, or the like, but is not limited to the various embodiments of the disclosure. For convenience of description, the one or more processors 130 will be designated as the processor 130 below. In other words, the processor 130 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the processor 130 may perform the keystone correction by projecting a test image to the screen (or projection plane). The test image according to an example may be a white image, but is not limited thereto.

The processor 130 may control the image projector 110 to project the test image included in an area in which each of a plurality of plurality of markers (or tags) is different. For example, the test image may be an image that includes only the plurality of markers. However, although the test image may include another image other than the plurality of markers, the another image (e.g., a background image) may be included so as to not be overlapped where the plurality of markers are located.

According to an example, each of the plurality of markers may be in a pattern form in which a black area and a white area are formed in a pre-set ratio in each of a plurality of directions.

According to an example, the plurality of markers may be located at a pre-defined (e.g., specified) location, for example, an area within a threshold distance from the four vertices of the test image of the image. For example, the plurality of markers may be located in an inner area by a pre-set ratio based on a size of a whole image with respect to the four vertices of the test image.

According to an embodiment, the processor 130 may identify screen-based coordinates corresponding to each of the plurality of pixels included in the test image based on keystone correction. For example, a plurality of screen-based coordinates corresponding to each of the plurality of pixels may include screen-based four vertex coordinates corresponding to the four vertices of each of the plurality of pixels included in the test image.

According to an embodiment, the processor 130 may identify a screen-based area corresponding to each of the plurality of pixels based on the identified screen-based coordinates. For example, the processor 130 may calculate a screen area of each of the plurality of pixels based on the screen-based four vertex coordinates of each of the plurality of pixels.

According to an embodiment, the processor 130 may identify a reference pixel from among a plurality of pixels based on the screen-based area corresponding to each of the plurality of pixels. For example, the processor 130 may identify a pixel corresponding to a maximum area from among the screen-based area corresponding to each of the plurality of pixels as the reference pixel.

According to an embodiment, the processor 130 may identify brightness correcting information corresponding to each of the plurality of pixels based on a screen-based area of the identified reference pixel and a screen-based area of each of the plurality of pixels. For example, the processor 130 may identify a value acquired by dividing the screen-based area of each of the plurality of pixels with the screen-based area of the reference pixel as the brightness correcting information corresponding to each of the plurality of pixels. For example, the brightness correcting information may be a correction coefficient that applies(or multiplies) a gain to a grayscale value of a pixel.

According to an embodiment, the processor 130 may identify the brightness correcting information corresponding to each of the plurality of pixels in a stack situation. Here, the stack situation may refer to one screen being implemented using a plurality of projectors. For example, one screen may be made by projecting two projection images using two projectors into one screen. In this case, a relatively bright screen may be implemented than when using one projector.

According to an embodiment, the processor 130 may identify an area in which a first test image which is projected to the screen according to keystone correction and a second test image which is projected to the screen from an external projector device are overlapped in the stack situation.

According to an embodiment, the processor 130 may identify the overlapped area identified on the screen as a plurality of virtual pixel areas. For example, the area in which the first test image and the second test image are overlapped may be a quadrangle area of a maximum size identified based on an aspect ratio of the first test image and an aspect ratio of the second test image from the area in which the first test image and the second test image are overlapped.

According to an embodiment, the processor 130 may identify projector-based coordinates corresponding to each of the plurality of virtual pixel areas.

According to an embodiment, the processor 130 may identify screen-based coordinates corresponding to the identified projector-based coordinates.

According to an embodiment, the processor 130 may acquire third brightness information corresponding to each of the plurality of virtual pixel areas based on first brightness information corresponding to the identified screen-based coordinates and second brightness information corresponding to the external projector device.

According to an example, the processor 130 may acquire the third brightness information by adding first brightness information of a first pixel corresponding to the identified screen-based coordinates and second brightness information corresponding to a second pixel corresponding to the identified screen-based coordinates based on the external projector device.

According to an example, the processor 130 may receive the second brightness information from the external projector device through a communication interface 140, acquire second brightness correcting information corresponding to each of the plurality of pixels included in the second test image based on the second brightness information and the third brightness information, and transmit the acquired second brightness correcting information to the external projector device through the communication interface 140.

According to an embodiment, the processor 130 may identify first brightness correcting information corresponding to each of the plurality of pixels included in the first test image based on the first brightness information and the third brightness information. For example, the processor 130 may identify a first pixel area with the lowest brightness from among a plurality of virtual pixel areas based on the third brightness information. The processor 130 may identify a brightness compensation value corresponding to each of the plurality of virtual pixel areas based on fourth brightness information corresponding to the first pixel area and the first brightness information of each of the plurality of virtual pixel areas. The processor 130 may identify the first brightness correcting information corresponding to each of the plurality of pixels included in the first test image based on the identified brightness compensation value.

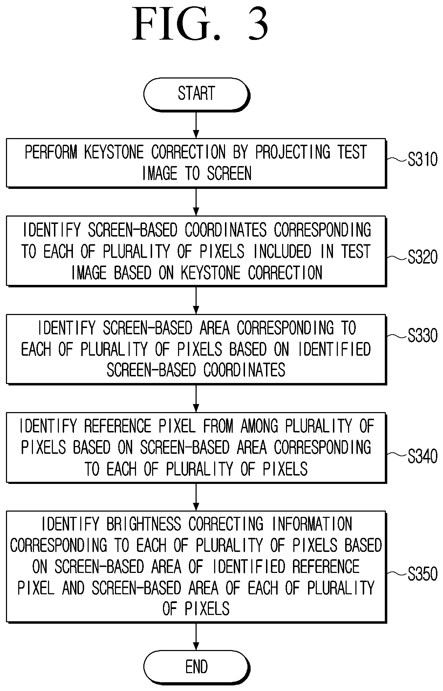

FIG. 3 is a flowchart illustrating an example method of controlling an electronic apparatus according to various embodiments.

Referring to FIG. 3, the electronic apparatus 100 may perform keystone correction by projecting the test image to the screen (S310).

The electronic apparatus 100 may identify the screen-based coordinates corresponding to each of the plurality of pixels included in the test image based on keystone correction (S320). For example, the plurality of screen-based coordinates corresponding to each of the plurality of pixels may include screen-based four vertex coordinates corresponding to the four vertices of each of the plurality of pixels included in the test image.

The electronic apparatus 100 may identify the screen-based area corresponding to each of the plurality of pixels based on the identified screen-based coordinates (S330). For example, the electronic apparatus 100 may calculate the screen area of each of the plurality of pixels based on the screen-based four vertex coordinates of each of the plurality of pixels.

The electronic apparatus 100 may identify the reference pixel from among the plurality of pixels based on the screen-based area corresponding to each of the plurality of pixels (S340). For example, the electronic apparatus 100 may identify the pixel corresponding to the maximum area from among the screen-based areas corresponding to each of the plurality of pixels as the reference pixel.

The electronic apparatus 100 may identify brightness correcting information corresponding to each of the plurality of pixels based on the screen-based area of the identified reference pixel and the screen-based area of each of the plurality of pixels (S350). For example, the electronic apparatus 100 may identify a value acquired by dividing the screen-based area of each of the plurality of pixels with the screen-based area of the reference pixel as the brightness correcting information corresponding to each of the plurality of pixels.

In FIG. 3, orders of the various steps have been mapped for convenience of description, but the orders such as those which have no relevance to order or are performable in parallel are not necessarily limited to the relevant orders.

The keystone correction method will be described in greater detail below with reference to FIG. 4A to FIG. 10.

According to an embodiment, an electronic device (100) may obtain third information indicating vertex positions of a test image in a captured image, based on first information indicating positions of a plurality of markers in the test image and second information indicating positions of the plurality of markers in the captured image obtained by an external device (e.g., a user terminal including a camera) capturing a screen. Thereafter, the electronic device (100) may correct the third information based on posture information of the external device, and may perform keystone correction based on the corrected third information.

According to an example, the electronic device (100) may control an image projection unit (110) to project, onto the screen, a test image in which each of a plurality of markers (or tags) is included in a different region. For example, the test image may include only the plurality of markers. However, the test image may further include an additional image other than the plurality of markers, and the additional image (e.g., a background image) may be included so as not to overlap positions where the plurality of markers is included.

According to an example, each of the plurality of markers may have a pattern form in which black areas and white areas are configured at a preset ratio in each of a plurality of directions.

According to an example, the plurality of markers may be located at predefined positions, for example, within an inner region that is within a threshold distance from the four vertices of the test image. For example, the plurality of markers may be located in an inner region by a preset ratio with respect to the overall size of the image, based on the four vertices of the test image.

According to an example, the electronic device (100) may obtain the first information indicating the positions of the plurality of markers in the test image and the second information indicating the positions of the plurality of markers in an image (hereinafter, a captured image) obtained by the external device capturing the screen. Here, the external device may be a user terminal including a camera, and the following description is provided on the assumption that the external device is a user terminal.

According to an embodiment, the electronic apparatus 100 may acquire first information indicating the location of the plurality of markers in an original test image projected through the image projector 110.

The electronic apparatus 100 may receive the second information from the user terminal 200 or acquire the second information based on the photographed image received from the user terminal 200. For example, the user terminal 200 may directly identify and transmit the second information indicating the location of the plurality of markers in the photographed image to the electronic apparatus 100, and the electronic apparatus 100 may acquire the second information directly from the received photographed image.

For convenience of description, coordinates of the original test image are described in a projector coordinate system, and coordinates in the photographed image are described in a camera coordinate system. Accordingly, the first information may correspond to the projector coordinate system, and the second information may correspond to the camera coordinate system. For convenience of description, the first information and the second information are named as first coordinate information and second coordinate information.

FIGS. 4A and 4B are diagrams illustrating example coordinate information according to various embodiments.

FIG. 4A is a diagram illustrating first coordinate information of a plurality of markers 411, 412, 413, and 414 in an original test image, for example, a projector coordinate system, and the first coordinate information may be P1, P2, P3, and P4. For example, the first coordinate information may be calculated based on a specific point, for example, a center point, of the plurality of markers 411, 412, 413, and 414.

FIG. 4B is a diagram illustrating second coordinate information of the plurality of markers 411, 412, 413, and 414 in a photographed image, that is, a camera coordinate system, and the second coordinate information may be C1, C2, C3, and C4. For example, the second coordinate information may be calculated based on a specific point (the same point as the first coordinate information), for example, a center point, of the plurality of markers 411, 412, 413, and 414.

Referring back to FIG. 2, the electronic apparatus 100 may acquire third information indicating a vertex area location of the test image in the photographed image based on the first coordinate information and the second coordinate information. The vertex area may be four points where each edge area meets. The third information may be coordinate information of the camera coordinate system, and may be named as third coordinate information for convenience of description.

According to an embodiment, the electronic apparatus 100 may acquire fourth information indicating the location of the vertex of the test image in the test image based on the first coordinate information and location information of a marker, and acquire third coordinate information in the photographed image based on a first H matrix. The fourth information may be coordinate information of the projector coordinate system, and may be named as fourth coordinate information for convenience of description.

In this case, the first H matrix may be acquired based on a mapping relationship between the first coordinate information and the second coordinate information. According to an embodiment, the electronic apparatus 100 knows four coordinate pairs based on the first coordinate information P1, P2, P3, and P4 and the second coordinate information C1, C2, C3, and C4, such that the first H matrix may be acquired.

The electronic apparatus 100 may transform the four vertex coordinates, for example, fourth coordinate information, into the camera coordinate system, for example, third coordinate information using the first H matrix in the projector coordinate. For example, the electronic apparatus 100 may pre-store four vertex coordinate information, for example, fourth coordinate information of the projector coordinate system in a test image, or calculate four vertex coordinates, for example, fourth coordinate information of the projector coordinate system based on the first coordinate information.

For example, each of the plurality of markers may be located in an inner area by a predetermined ratio based on the four vertices of the test image. In this case, the electronic apparatus 100 may acquire fourth coordinate information indicating a vertex location of the test image based on the first coordinate information indicating the location of the marker and a predetermined ratio. The fourth coordinate information may correspond to a projector coordinate system.

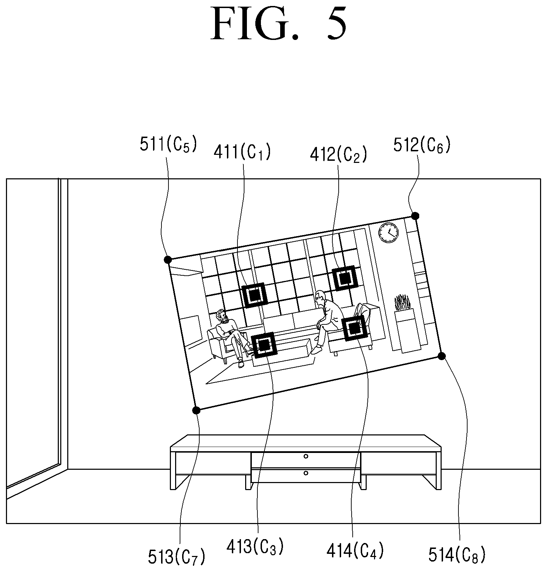

The electronic apparatus 100 may acquire third coordinate information by transforming the four vertex coordinates (fourth coordinate information) into the camera coordinate system in the projector coordinate system using the first H matrix. For example, as illustrated in FIG. 5, the electronic apparatus 100 may acquire third coordinate information C5, C6, C7, and C8, that is, third coordinate information of the camera coordinate system, corresponding to four vertices 511, 512, 513, and 514 of a projected image in a photographed image.

Referring back to FIG. 2, even though the electronic apparatus 100 acquires third coordinate information indicating vertex location of the test image in the photographed image, since it is hard to be considered that the user terminal 100 has performed photographing in a correct posture, a correction for the third coordinate information may be required.

Accordingly, the electronic apparatus 100 may correct the third coordinate information based on posture information of the user terminal 200. The posture information may include at least one of roll information, pitch information, or yaw information. According to an embodiment, the roll information and the pitch information may be acquired through an acceleration sensor provided in the user terminal 200. The yaw information may be acquired based on view angle information of the camera used for photographing a projection plane in the user terminal 200.

The electronic apparatus 100 may correct third coordinate information based on distance information between the user terminal 200 and the projection plane as well as the posture information during correction. For example, the electronic apparatus 100 may correct the third coordinate information to be rotated based on the posture information and correct the third coordinate information to be projected based on the distance information.

The following describes example rotation correction and projection correction methods.

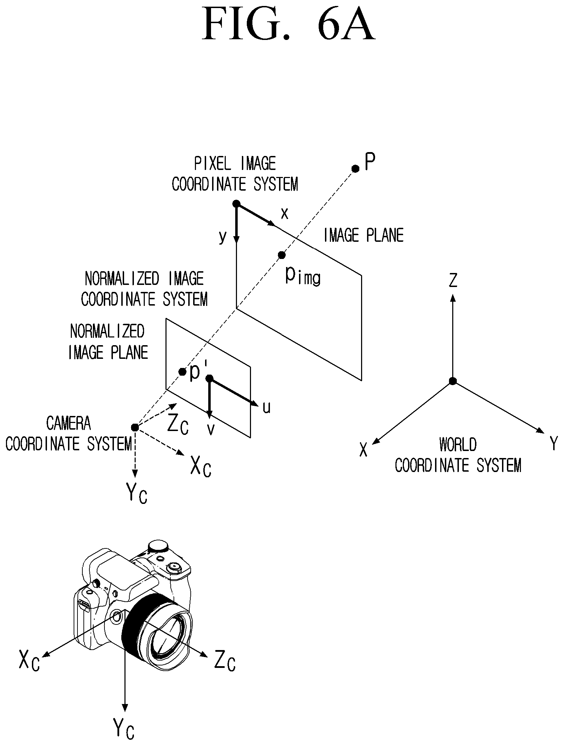

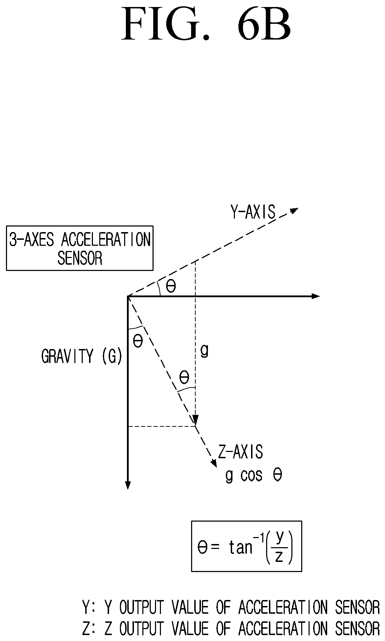

FIGS. 6A and 6B are diagrams illustrating an example acquisition method of roll information and pitch information according to various embodiments.

According to an embodiment, if Xc, Yc, and Zc axes are defined based on the user terminal 200 as illustrated in FIG. 6A, a roll angle φ rotating around y-axis and pitch angle θ rotating around an x-axis may be as follows.

【Equation 1】

$$\varphi = atan\left(\frac{A_Y}{\sqrt{A_X^2 + A_Z^2}}\right)$$

【Equation 2】

$$\theta = atan\left(\frac{A_X}{\sqrt{A_Y^2 + A_Z^2}}\right)$$

In Equation 1, $A_X$, $A_Y$, $A_Z$ are the x-axis, y-axis, and z-axis acceleration values of an acceleration sensor provided in the user terminal 200, respectively. For example, a pitch angle θ may be calculated based on a relationship as illustrated in FIG. 6B.

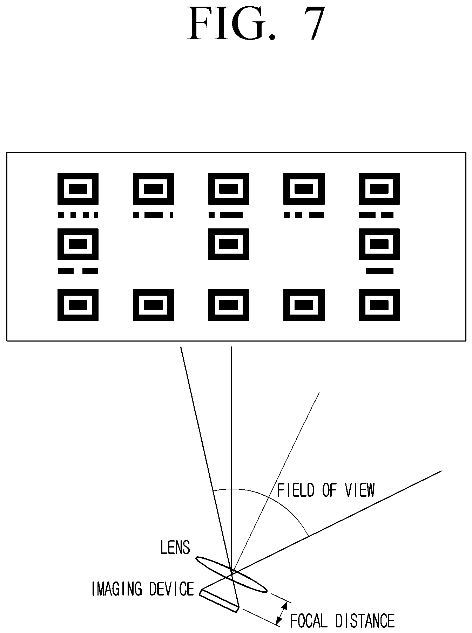

FIG. 7 is a diagram illustrating an example method of acquiring yaw information according to various embodiments.

Posture information related to a direction of gravity, for example, roll information and pitch information may be acquired using an output value of the acceleration sensor (or gravity sensor) as described above, but yaw information not related to the direction of gravity may be acquired using a geomagnetic sensor, a gyro sensor or the like based on a direction arbitrarily designated by the user. However, when the gyro sensor or the like is not used, the yaw information may be acquired based on the view angle information of the camera. For example, the electronic apparatus 100 may acquire coordinates of a center point of the projected image in the camera coordinate system based on third coordinate information C5, C6, C7, and C8 corresponding to the four vertices 511, 512, 513, and 514 of the projected image in the photographed image. The electronic apparatus 100 may acquire a pixel distance value between the center point coordinates of the projected image and the center point coordinates of the photographed image. The electronic apparatus 100 may acquire a camera rotation angle based on whole view angle: whole pixel = camera rotation angle: pixel distance value. For example, if whole angle of view is 80', a whole pixel is 4000px, and a pixel distance value is 500px, a camera rotation angle 10' may be acquired based on 80':4000px = camera rotation angle: 500px.

According to an embodiment, if it is identified that a projection plane is a predetermined area based on posture information of the external device 200, the electronic apparatus 100 may acquire at least one of roll information, pitch information, and yaw information by changing a reference value of a gravity direction among output values of the acceleration sensor.

For example, an image may be projected by turning 90 degrees even if the projection plane is a ceiling or a wall plane other than a general wall plane in the same or similar direction as the gravity direction. In this case, the electronic apparatus 100 may acquire at least one of roll information, pitch information, or yaw information by changing the reference value in the gravity direction among output values of the acceleration sensor. For example, if the reference value in the gravity direction among the output values of the acceleration sensor is an x-axis value based on a case in which the projection plane is a general wall plane, the reference value in the gravity direction may be changed to a y-axis value or a z-axis value when the projection plane is a ceiling, and at least one of roll information, pitch information, or yaw information may be acquired. In this case, if the x-axis value of the gravity direction reference value is more than a threshold value, the electronic apparatus 100 may determine that the projection plane is a ceiling rather than a general wall plane, or when projecting an image by turning 90 degrees even if it is a wall plane. Accordingly, a calculation error due to the posture information of the external device 200 may be prevented and/or reduced when projecting the image by turning 90 degrees even if the projection plane is a ceiling rather than a general wall plane or a wall plane.

According to an embodiment, the electronic apparatus 100 may acquire distance information between the user terminal 200 and the projection plane.

According to an embodiment, the electronic apparatus 100 may acquire distance information to a virtual plane in pixel units on which a camera image is projected rather than an actual projection plane. The virtual plane in pixel units may be a pixel coordinate system described in FIG. 1B.

According to an embodiment, when the user terminal 200 may be equipped with a distance sensor (e.g., ToF sensor), and if a distance (z-axis value) of each vertex may be known from the user terminal 200, a real world distance of the z-axis may be calculated in px units and a z-axis value may be scaled in px units. Since the distance between the x-axis and y-axis pixels may be identified through a photographed image, and the corresponding real world distance may be identified based on the ToF sensor, a ratio between the px unit and the real world distance may be calculated using the same to calculate the z-axis as px.

According to another example, when the user terminal 200 does not have a distance sensor and view angle information of a camera is known, distance information may be acquired based on the view angle information of a lens (sensor). For example, the view angle information of the lens may be acquired from an exchangeable image file format (EXIF).

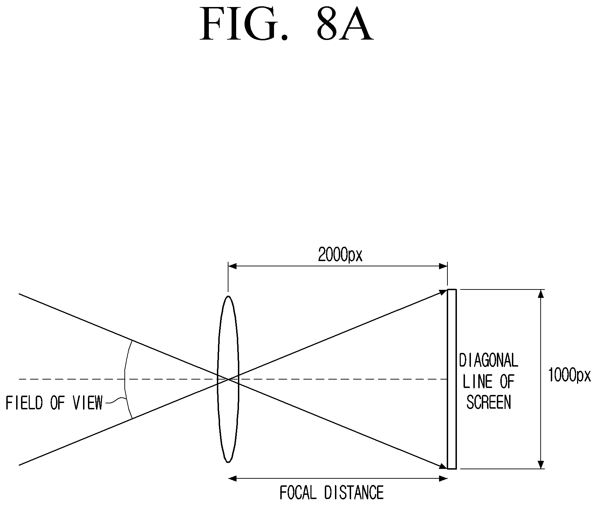

For example, a real world ratio of a focal distance and a screen diagonal may be fixed according to a view angle as illustrated in FIG. 8A. The diagonal of the screen may be acquirable based on the number of diagonal pixels, and a distance to an object may correspond to the focal distance. In other words, if two points of an imaging object are 1000px on an xy plane, a diagonal of the screen is 2000px, and a ratio of a focal distance and a screen diagonal is 2:1, a distance value of z-axis value from the camera of two points on the xy plane is 2:1 = x:2000, and the distance value may be 4000px. In other words, the xy plane may be 4000px away from the camera on the z-axis.

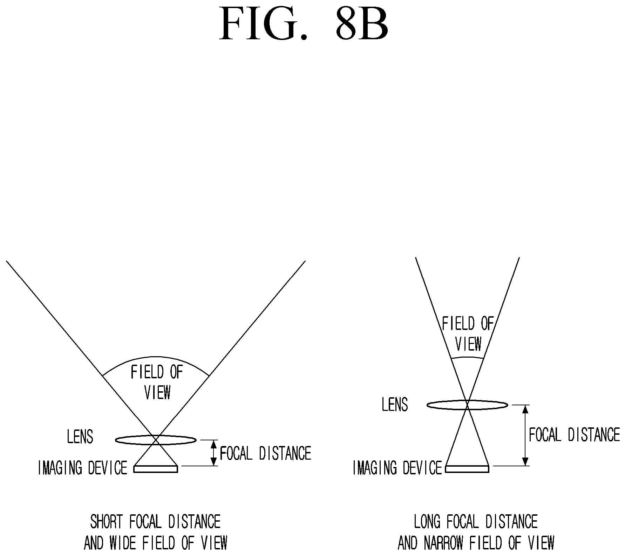

According to another example, a view angle is not known at all since there is no ToF sensor in the camera and no information such as focal distance, or the like, an error may be taken into consideration and calculation may be performed by inputting about 75 degrees, which is a lens field of view generally used in a user terminal. According to an embodiment, information on the camera may be received through an external server. For example, a camera manufacturer or a keystone correction service provider may store information on the camera in a cloud server or the like. In this case, the electronic apparatus 100 may receive camera's angle of view information from the external server. For example, the camera's angle of view information may include information such as sensor size, focal distance, or the like. As illustrated in FIG. 8B, the focal distance and the angle of view of the camera may be inversely proportional. In other words, the shorter the focal distance, the wider the field of view, and the longer the focal distance, the narrower the field of view.

when posture information of the user terminal 200 and distance information between the user terminal 200 and the projection plane are acquired, the electronic apparatus 100 may correct the third coordinate information based on the acquired information.

For example, the electronic apparatus 100 may correct the third coordinate information to be rotated based on the posture information of the user terminal 200, correct the third coordinate information that has been corrected to be rotated, to be projected based on distance information, and acquire the corrected third coordinate information.

The photographed image recognizes coordinates of the projection plane of the camera, however, it is not known how the projected plane of the projector image is located in three dimensions, and thus 3D rotation correction is necessary. However, if there is the ToF sensor, it may be known, but it is assumed that the ToF sensor is not used. In addition, a method of generating a virtual image may be used by assuming that the projection plane is not tilted after correction and is perpendicular to user gravity. For example, it is assumed four virtual points a1, a2, a3, and a4 are generated and their Z-axis values are all the same. In this case, posture information, that is, an inverse of roll, pitch and yaw values, may be applied as correction values and acquire point angles b1, b2, b3, and b4 points of the camera imaging plane and the inclined relational plane. A transformation formula from a plane including b1, b2, b3, b4 points to a plane including a1, a2, a3, and a4 points is acquired. Specifically, a transformation formula for rotational transformation such as the following Equation 3 may be acquired.

【Equation 3】

$$R_{XYZ \rightarrow xyz} = R_\psi R_\theta R_\phi$$

$$= \begin{bmatrix} \cos\psi & \sin\psi & 0 \\ -\sin\psi & \cos\psi & 0 \\ 0 & 0 & 1 \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} 1 & 0 & 0 \\ 0 & \cos\phi & \sin\phi \\ 0 & -\sin\phi & \cos\phi \end{bmatrix}$$

$$= \begin{bmatrix} \cos\psi & \sin\psi & 0 \\ -\sin\psi & \cos\psi & 0 \\ 0 & 0 & 1 \end{bmatrix} \begin{bmatrix} \cos\theta & \sin\theta\sin\phi & -\sin\theta\cos\phi \\ 0 & \cos\phi & \sin\phi \\ \sin\theta & -\cos\theta\sin\phi & \cos\theta\cos\phi \end{bmatrix}$$

$$= \begin{bmatrix} \cos\psi\cos\theta & \cos\psi\sin\theta\sin\phi+\sin\phi\cos\phi & -\cos\psi\sin\theta\cos\phi+\sin\psi\sin\phi \\ -\sin\psi\cos\theta & -\sin\psi\sin\theta\sin\phi+\cos\psi\cos\phi & \sin\psi\sin\theta\cos\phi+\cos\psi\sin\phi \\ \sin\theta & -\cos\theta\sin\phi & \cos\theta\cos\phi \end{bmatrix}$$

Based on Equation 3, the electronic apparatus 100 may correct third coordinate information to be rotated and acquire the third coordinate information that has been corrected to be rotated. Accordingly, the third coordinate information that has been corrected to be rotated, that is, coordinates for points in three dimensions, may be acquired.

The electronic apparatus 100 may calculate how the 3D coordinates acquired through the rotation correction described above is to be projected onto an actual camera imaging plane. In other words, the electronic apparatus 100 may correct the 3D coordinates to be projected that is acquired through the rotation correction, and acquire a final corrected third coordinate information. Referring to FIG. 1B, a point on 3D on the camera coordinate system may be projected onto the imaging plane along a virtual vanishing point line through the camera sensor. Accordingly, the electronic apparatus 100 may calculate how a point on the 3D camera coordinate system will be projected onto a 2D imaging plane, e.g., a two-dimensional normal coordinate system.

For example, if a projection reference point is set as an origin point, the transformation formula for projecting the point P in 3D to p' may be given as illustrated in Equation 4.

EP 4 761 236 A1

【Equation 4】

$$s \begin{vmatrix} u \\ v \\ 1 \end{vmatrix} = \begin{bmatrix} 1 & 0 & 0 & 0 \\ 0 & 1 & 0 & 0 \\ 0 & 0 & 1/d & 0 \end{bmatrix} \begin{bmatrix} X_C \\ Y_C \\ Z_C \\ 1 \end{bmatrix}$$

According to Equation 4, when the projection plane is Zc = d, (Xc, Yc, Zc, 1) may be projected as (Xc, Yc, Zc/d) = (D*xC/Zc, D*yc/Zc, 1).

As described above, the electronic apparatus 100 may correct the third coordinate information that has been corrected to be rotated, to be projected and acquire the final corrected third coordinate information.

However, in the example described above, projection correction is performed after rotation correction, but rotation correction may be performed after projection correction.

Referring back to FIG. 2, the electronic apparatus 100 may acquire a transformation matrix, e.g., a second H matrix, based on the finally corrected third coordinate information and vertex coordinates of the test image. Here, the final corrected third coordinate information and the vertex coordinates of the test image may be normal coordinate system coordinates (or pixel coordinate system coordinates), respectively. For example, if the finally corrected third coordinate information, that is, the four vertex coordinates are d1, d2, and d3, d4, and four vertex coordinates of the actual projection point of the test image are e1, e2, e3, and e4, a second pair of H A matrix may be acquired based on (d1, e1), (d2, e2), and (d3, e4). For example, if it is an FHD resolution projector, e1, e2, e3, and e4 may be (0,0), (1920,0), (0,1080), and (1920, 1080).

The electronic apparatus 100 may also identify a rectangular area of a maximum size corresponding to an aspect ratio of an input image within the identified area based on the corrected third coordinate information, and acquire fifth information corresponding to the identified rectangular area. For example, the fifth information may include coordinate information of each vertex of the identified rectangular area, and will be named as fifth coordinate information below for convenience of description.

In this case, the electronic apparatus 100 may expand a quadrangle to the same size vertically and horizontally from a center point where vertices of the first area acquired based on the corrected third coordinate information are diagonally connected, and identify whether the vertices of the quadrangle meet edges of the first area. In addition, the electronic apparatus 100 may expand small side of the quadrangle in a predetermined pixel unit and a large side of the quadrangle to correspond to an aspect ratio when the vertex of the expanded quadrangle and the edge of the first area meet. The electronic apparatus 100 may identify a rectangular area of maximum size at a location where a vertex corresponding to a diagonal of the expanded quadrangle meets the edge of the first area.

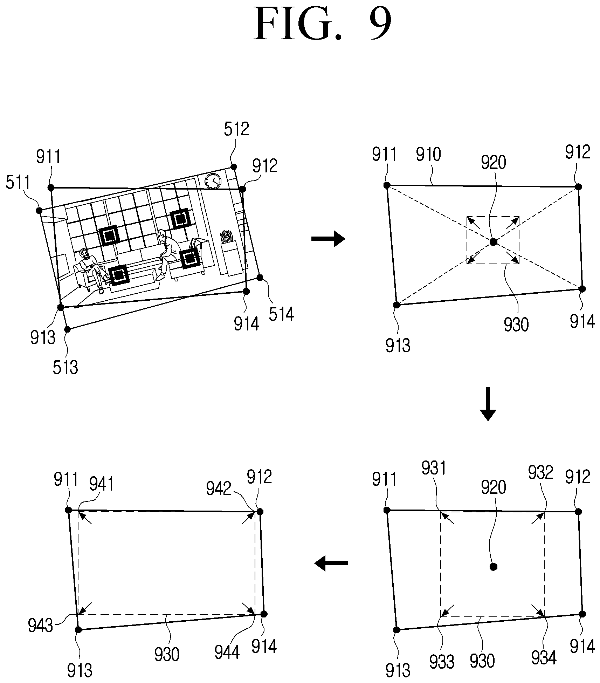

FIG. 9 is a diagram illustrating an example method for identifying a rectangular area of maximum size according to various embodiments.

As illustrated in FIG. 9, when the corrected third coordinate information d1, d2, d3, and d4, e.g, vertices 911, 912, 913, and 914 are acquired, a quadrangle may be expanded with a center point 920 diagonally meeting each vertex as a starting point.

According to an embodiment, the quadrangle is expanded to the same size from the starting point 920 up, down, left and right, and identify whether there is a portion beyond a projector projection plane 910. When there is no portion beyond the projection plane 910, it may be expanded by a predetermined ratio of a screen (e.g., 5%) and identifies whether the vertices of the expanded quadrangle meet edge of the projector projection plane.

When any one of the edges of the projection plane 910 and vertices 931, 932, 933, 934 of the quadrangle 930 meets, the small side of the quadrangle 930 may expand the quadrangle in a predetermined pixel unit (e.g., 1px), and the large side of the quadrangle 930 may expand the quadrangle according to a ratio. For example, if one point of the projection plane 910 meets in upper left, upper right, lower left, and lower right edges of the quadrangle 930, identify whether the vertex and the projection plane 910 edge meet by moving 1px to an opposite edge, and identify whether there is a point of contact by expanding the size by 1 px. If vertices not diagonal meet in the upper left, upper right, lower left, and lower right edges of the extended quadrangle 930, identify a meeting point by moving 1px transversely in the opposite direction vertically and horizontally, and identify whether there is a meeting point by expanding the size by 1px.

When vertices 942 and 943 existing on the diagonal of the expanded quadrangle 930 meet a boundary line of the projection plane 910, the expansion may end and coordinates g1, g2, g3, and g4 of the final vertices 941, 942, 943, and 944 may be acquired. In addition, the process may be terminated when a rectangular size moves back to the point where the rectangular size moved in the same situation in order to prevent and/or reduce a location of the quadrangle from moving indefinitely.

Referring back to FIG. 2, the electronic apparatus 100 may perform keystone correction by applying an inverse matrix of the second H matrix to the acquired fifth coordinate information. For example, if the coordinate information of the vertex corresponding to the largest square is g1, g2, g3, and g4, the inverse matrix of the second H matrix may be applied to acquire the coordinates of the projection area to be projected in the electronic apparatus 100. In other words, when the electronic apparatus 100 projects an image based on the coordinates, the user may view the rectangular area of maximum size.

However, in the example described above, it is described as correcting the vertex coordinates of the projected image based on the posture information of the camera, but it may also be possible to correct marker coordinates based on the posture information of the camera. In this case, after correcting the marker coordinates, the vertex coordinates of the projected image may be acquired based on the corrected marker coordinates. In other words, when the marker coordinates are corrected based on the posture information of the camera, it may not be necessary to correct the vertex coordinates based on the camera's posture information.

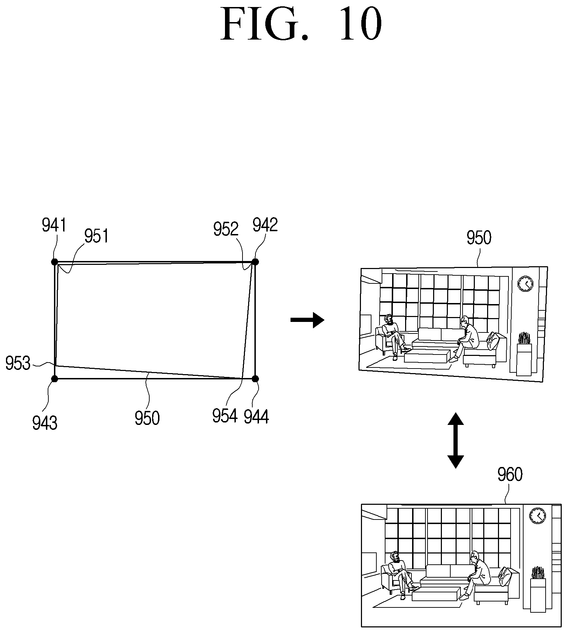

FIG. 10 is a diagram illustrating an example projection image according to a keystone correction according to various embodiments.

In FIG. 10, vertices 941, 942, 943, and 944 correspond to fifth coordinate information, and an area identified by the vertices may refer, for example, to a rectangular area of maximum size acquired in FIG. 9. In this case, the electronic apparatus 100 may apply the inverse matrix of the second H matrix to the fifth coordinate information and determine coordinates of an image to be projected. In other words, the electronic apparatus 100 may determine an inverse matrix of the second H matrix at the coordinates of the vertices 941, 942, 943, and 944, and determine 951, 952, 953, and 954, which are the vertex coordinates of the keystone-corrected image. In this case, the distorted image 950 is projected since the electronic apparatus 100 projects the image based on the vertices 951, 952, 953, and 954, but the user can view the rectangular image 960.

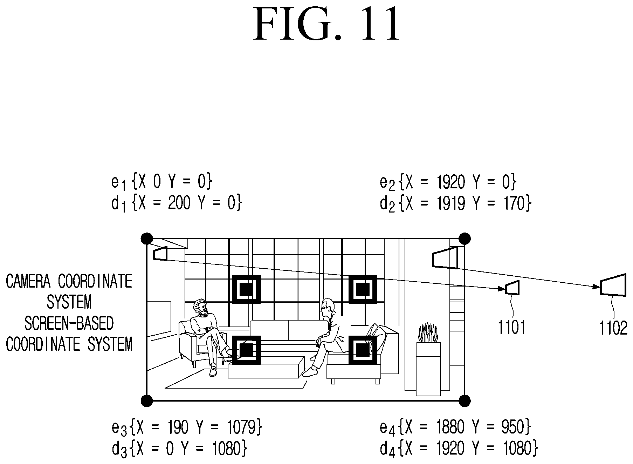

When performing the keystone correction as described above, the projection area may be a random quadrangle based on the projector, but may be in a rectangular form based on the screen. For example, as shown in FIG. 11, assuming that it is the FHD resolution projector and the projector-based coordinate values for projecting a rectangle based on the screen in an upper left, an upper right, a lower left, and a lower right order are (200, 0), (1919,170) (190, 1079) (1880,950), the screen-based coordinates of the four vertices may be set to coordinates of (0,0), (1920,0), (0,1080), (1920,1080) to match a 16:9 ratio.

According to an embodiment, the electronic apparatus 100 may identify screen-based coordinates corresponding to each pixel included in the test image. For example, it may be necessary for the electronic apparatus 100 to perform coordinate conversion to identify whether each pixel included in the test image is projected to which coordinate based on the screen in order to identify whether each pixel is being projected to which respective size on the screen-based coordinates based on the projector. Accordingly, the electronic apparatus 100 may acquire the conversion matrix for identifying the screen-based coordinates corresponding to each pixel based on the projector.

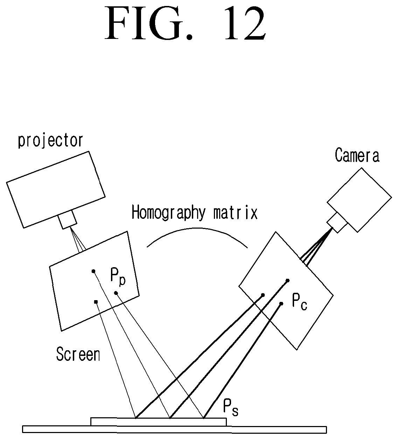

According to an example, the electronic apparatus 100 may acquire the coordinate conversion matrix (or an inter-planar projection relationship conversion matrix) based on a pair of the projector-based coordinates and the screen-based coordinates. For example, as shown in FIG. 12, the electronic apparatus 100 may acquire the coordinate conversion matrix based on a pair of projector coordinates $P_P$ and screen coordinates $P_S$. For example, if the four vertex coordinates of the projector coordinates $P_P$ are d1, d2, d3, and d4, and the four vertex coordinates of the screen coordinates $P_S$ are e1, e2, e3, and e4, the conversion matrix may be acquired based on four pairs of (d1, e1), (d2, e2), (d3, e3), and (d4, e4). For example, in the case of the FHD resolution projector, e1, e2, e3, and e4 may be (0,0), (1920,0), (0,1080), and (1920,1080). According to an example, the coordinate conversion matrix may be the second H matrix described above.

According to an example, the coordinate conversion matrix may be represented with Equation 5 below.

**【Equation 5】**

$$x' \propto Hx \Longleftrightarrow \lambda \begin{bmatrix} x' \\ y' \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x \\ y \\ 1 \end{bmatrix}$$
$$H$$

According to an embodiment, the electronic apparatus 100 may acquire the screen-based coordinates corresponding to each pixel with respect to the projector based on the coordinate conversion matrix (S320).

According to an example, in FIG. 11, a projector-based projection area may be an atypical quadrangle that ranges from 200,0 to 1880,950. The electronic apparatus 100 may consecutively calculate screen-based conversion coordinates for each pixel from (0,0) to (1919,1079) based on the FHD resolution projector. For example, the electronic apparatus 100 may consecutively calculate the screen-based conversion coordinates for each pixel from (0,0) to (1919,1079) except for the black area outside of the keystone correction area. For example, the electronic apparatus 100 may calculate the four vertex coordinates of each pixel based on the screen by applying the second H matrix to the four vertex coordinates of each pixel based on the projector.

According to an example, the projector-based pixel may have a 1*1 size, but may be an atypical quadrangle (e.g., 1101, 1102) based on the screen. For example, the upper left end pixel (200,0) may have a width of unit 1 to (201,1) based on the projector, but may be a quadrangle with corner coordinates (0,0), (1.01, 0.04), (0.007,1.0), and (1.004, 1.05) based on the screen. As shown in FIG. 11, each pixel may be a square (e.g., 1*1) in the projector coordinate system, but each pixel may have a random shape which is not necessarily a square or a rectangle in a screen coordinate system. For example, an area that is relatively close with the projector may become brighter as the pixel becomes smaller, and an area that is relatively far may become darker as the pixel becomes bigger based on a front projection.

According to an example, the electronic apparatus 100 may calculate, based on the screen-based coordinates corresponding to each pixel being calculated based on the projector, the screen-based area of each pixel with respect to the projector based on the calculated coordinates (S330). For example, the electronic apparatus 100 may calculate the screen-based area of each pixel with respect to the projector based on the four vertex coordinates of each pixel with respect to the screen.

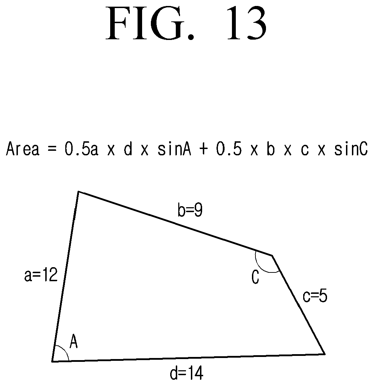

According to an example, if the coordinates of the four vertices in the quadrangle are known, an area of the quadrangle may be calculated. For example, referring to FIG. 13, the area of the quadrangle may be calculated using a triangle area equation. Assuming that there is a line connected from a point between line a and line b to a point between line c and line d, the line may divide the quadrangle to two different triangles. An area of the triangle may be ab*sinC, because there are a total of two triangles based on an angle C being an angle between side a and side b, the area of the quadrangle may be calculated using this equation twice and adding thereof. Thereby, the area of the quadrangle may be calculated based on the equation of half of a length of side 1 * a length of side 4 * sin(an angle between side 1 and side 4) + 0.5 * a length of side 2 * a length of side 3 * sin(an angle between side 2 and side 3), that is, 0.5 * a * d * sin A + 0.5 * b * c * sin C. Accordingly, assuming that a is 12, b is 9, c is 5, d is 12, A is 80°, and C is 110° (a=12, b=9, c=5, d=12, A=80°, C=110°), the area of the quadrangle may be calculated as below.

$$\text{quadrangle area} = 0.5 \,(12 \times 14) \times \sin(80) + 0.5 \times (9 \times 5) \times \sin(110)$$

$$= 84 \times \sin(80) + 22.5 \times \sin(110)$$

$$= 84 \times 0.984 + 22.5 \times 0.939$$

$$= 82.66 + 21.13 = 103.79 \text{ cm}^2$$

When trying to acquire an area of a parallelogram, because values of angles facing each other are the same, an equation for acquiring the area may be simplified such as area = 0.5*(ad + bc) * sin A.

According to an embodiment, the electronic apparatus 100 may identify the reference pixel based on the screen-based area of each pixel (S340). For example, the electronic apparatus 100 may identify the pixel corresponding to the maximum area from among the screen-based areas corresponding to each pixel as the reference pixel. Because an area and brightness of the pixel is inversely proportional, the pixel with the largest area may have the lowest brightness. Because a maximum brightness typically outputtable by each projector is pre-set, adjusting the brightness downwards may be easy but adjusting the brightness upwards may be difficult. Accordingly, the above is to match brightness uniformity to a brightness of a relevant pixel.

According to an embodiment, the electronic apparatus 100 may identify the brightness correcting information corresponding to each pixel based on the screen-based area of the identified reference pixel and the screen-based area of each pixel (S350). According to an example, the electronic apparatus 100 may identify the value acquired by dividing the screen-based area of each pixel with the screen-based area of the reference pixel as the brightness correcting information corresponding to each pixel. For example, the electronic apparatus 100 may identify a brightness correcting ratio (or a brightness adjusting gain) of each pixel based on 'pixel area / reference pixel area'.

According to an embodiment, the electronic apparatus 100 may store brightness correcting information calculated for each pixel in the memory 120. For example, the electronic apparatus 100 may store the calculated brightness correcting information in the memory 120 in a form of a lookup table (LUT) that includes the brightness correction ratio (or brightness adjusting gain) corresponding to each pixel. The lookup table may refer to a data structure formed of keys and values so as to quickly call previously stored values without having to perform separate calculations, and may be a table mapped with the brightness adjusting ratio corresponding to the location of each pixel (or coordinates).

According to an embodiment, the electronic apparatus 100 may project an image with corrected grayscale by correcting the grayscale of the image based on the brightness correcting information for each pixel stored in the memory 120. For example, based on the electronic apparatus 100 projecting a specific image, a corrected grayscale value may be acquired by multiplying the brightness adjusting ratio corresponding to the grayscale value of each pixel that form the relevant image, and the image including the corrected grayscale value may be projected to the screen. Accordingly, because a pixel brightness of the projection image becomes uniform, the user may be able to view a uniform image.

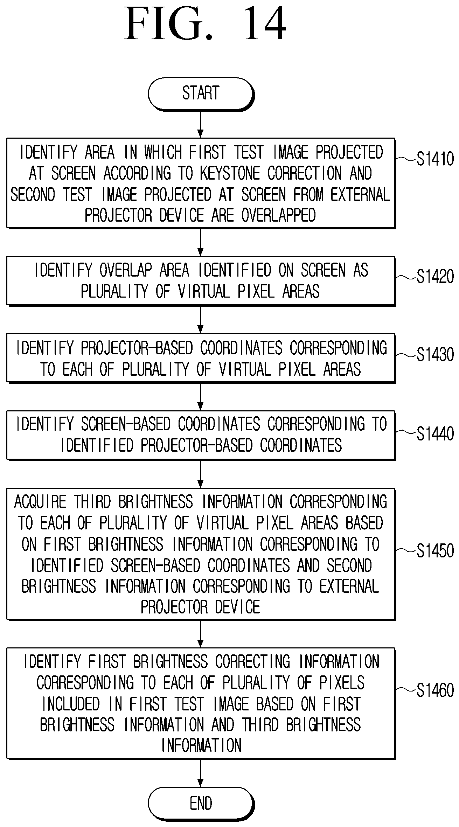

FIG. 14 is a flowchart illustrating an example method of controlling an electronic apparatus according to various embodiments.

According to an embodiment, the electronic apparatus 100 may identify the brightness correcting information corresponding to each of the plurality of pixels in a stack situation. The stack situation may refer to one screen being implemented using a plurality of projectors.

Referring to FIG. 14, the electronic apparatus 100 may identify an area in which the first test image projected at the screen according to keystone correction and the second test image projected at the screen from an external projector device are overlapped (S1410). According to an example, the area in which the first test image and the second test image are overlapped may be a quadrangle area of a maximum size identified based on the aspect ratio of the first test image and the aspect ratio of the second test image in the area in which the first test image and the second test image are overlapped. For example, in case that the electronic apparatus 100 and the external projector device are implemented with the FHD resolution projector, the area may be a quadrangle area of a maximum size corresponding to a FHD aspect ratio.

The electronic apparatus 100 may identify the overlapped area identified on the screen as the plurality of virtual pixel areas (S1420).

The electronic apparatus 100 may identify the projector-based coordinates corresponding to each of the plurality of virtual pixel areas (S1430).

The electronic apparatus 100 may identify the screen-based coordinates corresponding to the identified projector-based coordinates (S1440).

The electronic apparatus 100 may acquire third brightness information corresponding to each of the plurality of virtual pixel areas based on the first brightness information corresponding to the identified screen-based coordinates and the second brightness information corresponding to the external projector device (S1450). According to an example, the electronic apparatus 100 may acquire the third brightness information by adding the first brightness information of the first pixel corresponding to the identified screen-based coordinates and the second brightness information corresponding to the second pixel corresponding to the identified screen-based coordinates based on the external projector device. According to an example, the electronic apparatus 100 may receive the second brightness information from the external projector device.

The electronic apparatus 100 may identify the first brightness correcting information corresponding to each of the plurality of pixels included in the first test image based on the first brightness information and the third brightness information (S1460). According to an example, the electronic apparatus 100 may identify the first pixel area with the lowest brightness from among the plurality of virtual pixel areas based on the third brightness information, and identify the brightness compensation value corresponding to each of the plurality of virtual pixel areas based on the fourth brightness information corresponding to the first pixel area and the first brightness information of each of the plurality of virtual pixel areas. According to an example, the electronic apparatus 100 may identify the first brightness correcting information corresponding to each of the plurality of pixels included in the first test image based on the identified brightness compensation value.

According to an embodiment, the electronic apparatus 100 may acquire the second brightness correcting information corresponding to each of the plurality of pixels included in the second test image based on the second brightness information and the third brightness information received from the external projector device, and transmit the acquired second brightness correcting information to the external projector device.

In FIG. 14, the order of steps have been mapped for convenience of description, but the order is not necessarily limited.

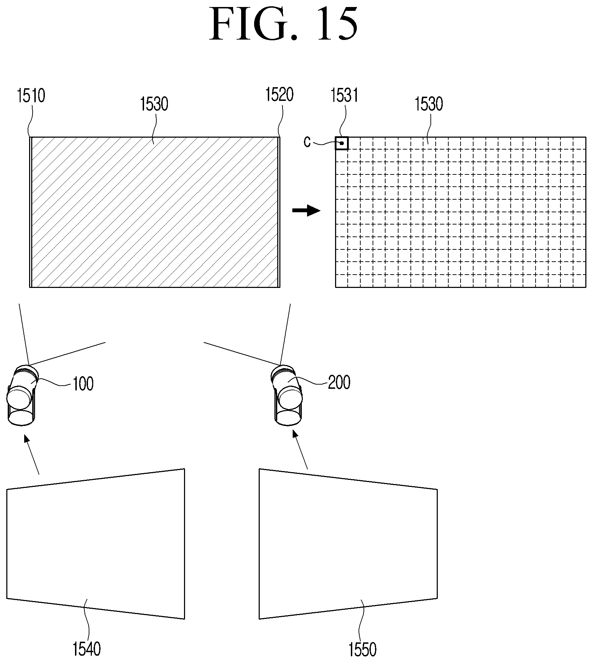

FIG. 15 is a diagram illustrating an example method of acquiring brightness correcting information in a stack situation according to various embodiments.

Referring to FIG. 15, the electronic apparatus 100 may identify an area 1530 in which a first test image 1510 projected at a screen according to keystone correction and a second test image 1520 projected at the screen from an external projector device 200 are overlapped. For example, a projector-based image corresponding to the first test image 1510 projected by the electronic apparatus 100 may be a first test image 1540, and a projector-based image corresponding to the second test image 1520 projected by the external projector device 200 may be a first test image 1550.

According to an embodiment, the electronic apparatus 100 may identify the overlap area 1530 identified on the screen as the plurality of virtual pixel areas. For example, the electronic apparatus 100 may divide a virtual pixel area included in the overlap area 1530 into an m-number of horizontal grid areas and an n-number of vertical grid areas.

According to an embodiment, the electronic apparatus 100 may identify the projector-based coordinates corresponding to each of the plurality of virtual pixel areas, and identify the screen-based coordinates corresponding to the identified projector-based coordinates. For example, the electronic apparatus 100 may identify the projector-based coordinates corresponding to coordinates corresponding to a center point of each virtual pixel area, and identify the screen-based coordinates corresponding to the identified projector-based coordinates. For example, the electronic apparatus 100 may identify the screen-based coordinates corresponding to the projector-based coordinates of a center point C of a first virtual pixel area 1531 in FIG. 15.

According to an embodiment, the electronic apparatus 100 may identify the first brightness correcting information corresponding to each of the plurality of pixels based on the first brightness information corresponding to the identified screen-based coordinates and the second brightness information corresponding to the external projector device. For example, the electronic apparatus 100 may identify a first brightness value with respect to an area of the screen-based pixel based on the screen-based coordinates corresponding to the projector-based pixel as described above. In addition, the electronic apparatus 100 may receive a second brightness value with respect to the area of the screen-based pixel from the external projector device 200. In this case, the external projector device 200 may calculate the second brightness value with respect to the area of the screen-based pixel in a same method as the electronic apparatus 100.

According to an embodiment, the electronic apparatus 100 may calculate a brightness value of each virtual pixel area by adding the first brightness value and the second brightness value corresponding to each virtual pixel area. For example, the electronic apparatus 100 may calculate brightness values from a coordinate of a virtual coordinate system grid (0,0) to a (m,n) coordinate position

According to an embodiment, the electronic apparatus 100 may identify, based on the brightness value of each virtual pixel area being calculated, a reference virtual pixel area from among the virtual pixel areas, and identify the first brightness correcting information corresponding to each virtual pixel area based on the brightness value (or an area value) of the identified reference virtual pixel area. In this case, the first brightness correcting information may be brightness correcting information which is based on the electronic apparatus 100 in the stack situation. According to an example, the electronic apparatus 100 may identify the value acquired by dividing the brightness value of each virtual pixel area with the brightness value of the reference virtual pixel area as the first brightness correcting information corresponding to each virtual pixel area. For example, the electronic apparatus 100 may identify a brightness correcting ratio (or a brightness adjusting gain) of each virtual pixel area based on the 'brightness value of each virtual pixel area / brightness value of reference virtual pixel area'.

According to an embodiment, the electronic apparatus 100 may perform brightness correction by applying the first brightness correcting information corresponding to each virtual pixel area to the projector-based pixel corresponding to each virtual pixel area. For example, the electronic apparatus 100 may store the first brightness correcting information calculated for the projector-based pixel corresponding to each virtual pixel area in the memory 120. For example, the electronic apparatus 100 may store the first brightness correcting information in the memory 120 in a form of a lookup table (LUT) that includes a first brightness correction ratio (or brightness adjusting gain) corresponding to each pixel.

According to an embodiment, the electronic apparatus 100 may project an image with corrected grayscale by correcting the grayscale of the image based on the first brightness correcting information for each pixel stored in the memory 120 in the stack situation. For example, based on the electronic apparatus 100 projecting a specific image, a corrected grayscale value may be acquired by multiplying a first brightness adjusting ratio corresponding to the grayscale value of each pixel that form the relevant image, and the image including the corrected grayscale value may be projected to the screen.

According to an embodiment, the electronic apparatus 100 may calculate the second brightness correcting information with respect to the external projector device 200 in a same method as the first brightness correcting information, and transmit the calculated second brightness correcting information to the external projector device 200.

In FIG. 14 and FIG. 15, the electronic apparatus 100 has been described as calculating the brightness correcting information of the electronic apparatus 100 and the external projector device 200 in the stack situation, but is not limited thereto. For example, it may be possible to calculate the brightness correcting information of the electronic apparatus 100 and the external projector device 200 in the stack situation by receiving information necessary in another external device that communicates with the electronic apparatus 100 and the external projector device 200.

In addition, in the various embodiments, the brightness correcting information has been described as being calculated based on uniformly adjusting the brightness of the whole screen, but according to an embodiment, the brightness correcting information of each pixel may be calculated for a center portion to have a relatively high brightness and a peripheral portion to have a relatively low brightness in order to enhance an average brightness of the whole screen. According to an embodiment, the brightness correcting information of each pixel may be calculated to an extent a gap between a bright pixel and a dark pixel is partially reduced.

In addition, in the various embodiments, the brightness correcting information has been described as being calculated by calculating the screen-based width of each pixel, but according to an embodiment, the brightness correcting information may be calculated by calculating the screen-based width by sampling a portion of the pixels, and the brightness correcting information may also be calculated by applying weight values according to an interpolation method for the pixels in-between the sampled pixels. In this case, an amount of computation for calculating the brightness correcting information may be reduced. For example, because a brightness of a pixel adjusted from the projector is ultimately proportionate to a distance, the weight values may be calculated by calculating the distance value.

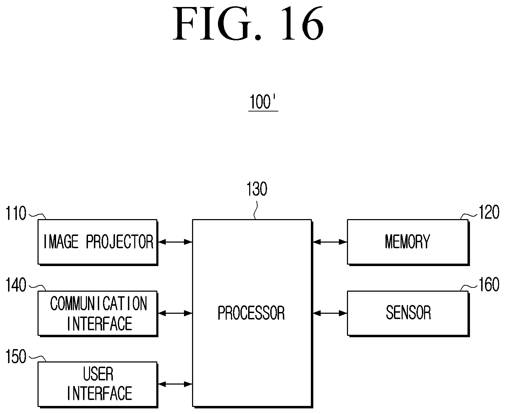

FIG. 16 is a block diagram illustrating an example configuration of an electronic apparatus according to various embodiments.

Referring to FIG. 16, an electronic apparatus 100' may include the image projector 110, the memory 120, one or more processors (e.g., including processing circuitry) 130, the communication interface (e.g., including communication circuitry) 140, a user interface (e.g., including interface circuitry) 150, and a sensor 160.

The image projector 110 may extend or reduce an image according to a distance with the screen (projection distance). That is, a zoom function may be performed according to the distance with the screen. At this time, the zoom function may include a hardware method of moving the lens and adjusting the size of the screen and a software method of adjusting the size of the screen by cropping an image, and the like. When the zoom function is performed, an adjustment of a focal point of the image is necessary. For example, a method of adjusting the focal point may include a manual focusing method, an automatic method, and the like.

The image projector 110 may provide the zoom function, a keystone function, or a focus function by automatically analyzing a surrounding environment and a projection environment without user input. Specifically, a projection part 111 may automatically provide the zoom function, the keystone function, or the focus function based on a distance between the electronic apparatus 100 and the screen sensed through a sensor (a depth camera, a distance sensor, an infrared sensor, an illuminance sensor, etc.), information on a space in which the electronic apparatus 100 is currently located, information on an amount of ambient light, and the like.

At least one communication interface 140 (hereinafter, referred to as the communication interface) may be implemented into various interfaces including various communication circuitry according to an embodiment of the electronic apparatus 100'. For example, the communication interface 140 may perform communication with an external device (e.g., user terminal), an external storage medium (e.g., a USB memory), an external server (e.g., WEBHARD), and the like through communication methods such as, for example, and without limitation, digital interfaces of various types, an AP based Wi-Fi (e.g., Wi-Fi, wireless LAN network), Bluetooth, ZigBee, a wired/wireless local area network (LAN), a wide area network (WAN), Ethernet, IEEE 1394, a high-definition multimedia interface (HDMI), a universal serial bus (USB), a mobile high-definition link (MHL), Audio Engineering Society/European Broadcasting Union (AES/EBU), an optical, a coaxial, or the like.

The user interface 150 may be implemented with a device including various interface circuitry such as a button, a touch pad, a mouse and a keyboard, or implemented as a touch screen, a remote controller transceiver, and the like capable of performing the above-described display function and an operation input function together therewith. The remote controller transceiver may receive a remote controller signal from an external remote control device, or transmit the remote controller signal through at least one communication method from among an infrared communication, a Bluetooth communication, or a Wi-Fi communication.

The sensor 160 may include sensors of various types such as, for example, and without limitation, an acceleration sensor, a distance sensor, and the like.

According to an implementation of the electronic apparatus 100', a speaker, a tuner, and a demodulator may be additionally included. The tuner (not shown) may receive a radio frequency (RF) broadcast signal by tuning a channel selected by a user or all pre-stored channels from among the RF broadcast signals received through an antenna. The demodulator (not shown) may receive and demodulate a digital IF (DIF) signal converted from the tuner, and perform a channel decoding, and the like. According to an embodiment, an input image received through the tuner may be provided to the processor 130 for a tone-mapping process according to an embodiment of the disclosure after being processed through the demodulator (not shown).

According to the various embodiments described above, the problem of brightness imbalance in the screen which is generated when performing keystone correction from the projector device may be resolved.

The methods according to the various embodiments of the disclosure described above may be implemented in an application form installable in an electronic apparatus of the related art. The methods according to the various embodiments of the disclosure described above may be performed using a deep learning-based artificial neural network (or a deep artificial neural network), that is, a training network model.

In addition, the methods according to the various embodiments of the disclosure described above may be implemented with only a software upgrade, or a hardware upgrade for the electronic apparatus of the related art.

In addition, the various embodiments of the disclosure described above may be performed through an embedded server provided in the electronic apparatus, or an external server of the electronic apparatus.

According to an embodiment of the disclosure, the various embodiments described above may be implemented with software including instructions stored in a machine-readable storage media (e.g., computer). The machine may call a stored instruction from the storage medium, and as a device operable according to the called instruction, may include an electronic apparatus (e.g., electronic apparatus (A)) according to the above-mentioned embodiments. Based on a command being executed by the processor, the processor may directly or using other elements under the control of the processor perform a function relevant to the command. The command may include a code generated by a compiler or executed by an interpreter. The machine-readable storage medium may be provided in a form of a non-transitory storage medium. Herein, the 'non-transitory' storage medium is tangible and may not include a signal, and the term does not differentiate data being semi-permanently stored or being temporarily stored in the storage medium.

According to an embodiment of the disclosure, a method according to the various embodiments described above may be provided included a computer program product. The computer program product may be exchanged between a seller and a purchaser as a commodity. The computer program product may be distributed in a form of the machine-readable storage medium (e.g., a compact disc read only memory (CD-ROM)), or distributed online through an application store (e.g., PLAYSTORE™). In the case of online distribution, at least a portion of the computer program product may be stored at least temporarily in a storage medium such as a server of a manufacturer, a server of an application store, or a memory of a relay server, or temporarily generated.

Each of the elements (e.g., a module or a program) according to the various embodiments described above may be formed as a single entity or a plurality of entities, and a portion of sub-elements of the above-mentioned sub-elements may be omitted, or other sub-elements may be further included in the various embodiments. Alternatively or additionally, a portion of the elements (e.g., modules or programs) may be integrated into one entity and perform the same or similar functions performed by the respective elements prior to integration. Operations performed by a module, a program, or another element, in accordance with various embodiments, may be executed sequentially, in a parallel, repetitively, or in a heuristic manner, or at least a portion of the operations may be executed in a different order, omitted or a different operation may be added.

While the disclosure has been illustrated and described with reference to various example embodiments thereof, it will be understood that the various example embodiments are intended to be illustrative, not limiting. It will be understood by those skilled in the art that various changes in form and detail may be made therein without departing from the true spirit and full scope of the disclosure, including the appended claims and their equivalents. It will also be understood that any of the embodiment(s) described herein may be used in conjunction with any other embodiment(s) described herein.

**Claims**

1. An electronic apparatus, comprising:

    an image projector;
    a memory storing one or more instructions; and
    at least one processor, comprising processing circuitry operatively connected with the image projector and the memory,
    wherein at least one processor, individually and/or collectively, is configured to execute the one or more instructions and to:

        perform a keystone correction by projecting a test image to a screen,
        identify screen-based coordinates corresponding to each of a plurality of pixels of the test image based on the keystone correction,
        identify a screen-based area corresponding to each of the plurality of pixels based on the identified screen-based coordinates,
identify a reference pixel from among the plurality of pixels based on the screen-based area corresponding to each of the plurality of pixels, and
identify brightness correcting information corresponding to each of the plurality of pixels based on a screen-based area of the identified reference pixel and a screen-based area of each of the plurality of pixels.

2. The electronic apparatus of claim 1, wherein
at least one processor, individually and/or collectively, is configured to:
identify a value acquired by dividing the screen-based area of each of the plurality of pixels with a screen-based area of the reference pixel as the brightness correcting information corresponding to each of the plurality of pixels.

3. The electronic apparatus of claim 1, wherein
at least one processor, individually and/or collectively, is configured to:
identify a pixel corresponding to a maximum area from among the screen-based area corresponding to each of the plurality of pixels as the reference pixel.

4. The electronic apparatus of claim 1, wherein
the plurality of screen-based coordinates corresponding to each of the plurality of pixels comprises:

   screen-based four vertex coordinates corresponding to four vertices of each of the plurality of pixels of the test image, and
   at least one processor, individually and/or collectively, is configured to:
   calculate a screen area of each of the plurality of pixels based on the screen-based four vertex coordinates of each of the plurality of pixels.

5. The electronic apparatus of claim 1, wherein
at least one processor, individually and/or collectively, is configured to:

   identify an area in which a first test image projected at the screen according to the keystone correction and a second test image projected at the screen from an external projector device overlap,
   identify the overlapped area identified on the screen as a plurality of virtual pixel areas,
   identify projector-based coordinates corresponding to each of the plurality of virtual pixel areas,
   identify screen-based coordinates corresponding to the identified projector-based coordinates,
   acquire third brightness information corresponding to each of the plurality of virtual pixel areas based on first brightness information corresponding to the identified screen-based coordinates and second brightness information corresponding to the external projector device, and
   identify first brightness correcting information corresponding to each of the plurality of pixels of the first test image based on the first brightness information and the third brightness information.

6. The electronic apparatus of claim 5, wherein
at least one processor, individually and/or collectively, is configured to:
acquire the third brightness information by adding the first brightness information of a first pixel corresponding to the identified screen-based coordinates and the second brightness information corresponding to a second pixel corresponding to the identified screen-based coordinates based on the external projector device.

7. The electronic apparatus of claim 5, wherein
at least one processor, individually and/or collectively, is configured to:

   identify a first pixel area with lowest brightness from among the plurality of virtual pixel areas based on the third brightness information,
   identify a brightness compensation value corresponding to each of the plurality of virtual pixel areas based on fourth brightness information corresponding to the first pixel area and the first brightness information of each of the plurality of virtual pixel areas, and
   identify the first brightness correcting information corresponding to each of the plurality of pixels of the first test image based on the identified brightness compensation value.

8. The electronic apparatus of claim 5, wherein
an area in which the first test image and the second test image overlap is a quadrangle area of a maximum size identified based on an aspect ratio of the first test image and an aspect ratio of the second test image in an area in which the first test image and the second test image overlap.

9. The electronic apparatus of claim 5, further comprising:

a communication interface, comprising communication circuitry,
wherein at least one processor, individually and/or collectively, is configured to:

receive the second brightness information from the external projector device through the communication interface,
acquire second brightness correcting information corresponding to each of the plurality of pixels of the second test image based on the second brightness information and the third brightness information, and
transmit the acquired second brightness correcting information to the external projector device through the communication interface.

10. The electronic apparatus of claim 1, wherein

the test image comprises a plurality of markers, and
at least one processor, individually and/or collectively, is configured to:

acquire third information indicating a vertex area location of the test image in the photographed image based on first information indicating a location of the plurality of markers in the test image and second information indicating a location of the plurality of markers in the photographed image which photographed the screen from an external device,
correct the third information based on orientation information of the external device, and
perform the keystone correction based on the corrected third information.

11. A method of controlling an electronic apparatus, the method comprising:

performing a keystone correction by projecting a test image to a screen;
identifying screen-based coordinates corresponding to each of a plurality of pixels of the test image based on the keystone correction;
identifying a screen-based area corresponding to each of the plurality of pixels based on the identified screen-based coordinates;
identifying a reference pixel from among the plurality of pixels based on a screen-based area corresponding to each of the plurality of pixels; and
identifying brightness correcting information corresponding to each of the plurality of pixels based on a screen-based area of the identified reference pixel and a screen-based area of each of the plurality of pixels.

12. The method of claim 11, wherein:
the identifying brightness correcting information comprises:
identifying a value acquired by dividing the screen-based area of each of the plurality of pixels with the screen-based area of the reference pixel as brightness correcting information corresponding to each of the plurality of pixels.

13. The method of claim 11, wherein:
the identifying a reference pixel comprises:
identifying a pixel corresponding to a maximum area from among the screen-based area corresponding to each of the plurality of pixels as the reference pixel.

14. The method of claim 11, wherein:
the plurality of screen-based coordinates corresponding to each of the plurality of pixels comprises:

screen-based four vertex coordinates corresponding to four vertices of each of the plurality of pixels of the test image, and
the identifying a reference pixel comprises:
calculating a screen area of each of the plurality of pixels based on the screen-based four vertex coordinates of each of the plurality of pixels.

**15.** A non-transitory computer-readable recording medium storing computer instructions which, when executed by at least one processor of an electronic apparatus, individually and/or collectively, cause the electronic apparatus to perform operations comprising:

performing a keystone correction by projecting a test image to a screen;

identifying screen-based coordinates corresponding to each of a plurality of pixels of the test image based on the keystone correction;

identifying a screen-based area corresponding to each of the plurality of pixels based on the identified screen-based coordinates;

identifying a reference pixel from among the plurality of pixels based on a screen-based area corresponding to each of the plurality of pixels; and

identifying brightness correcting information corresponding to each of the plurality of pixels based on a screen-based area of the identified reference pixel and a screen-based area of each of the plurality of pixels.

# FIG. 1A

$$H_{4point} = \begin{pmatrix} \Delta u1 & \Delta u1 \\ \Delta u2 & \Delta u2 \\ \Delta u3 & \Delta u3 \\ \Delta u4 & \Delta u4 \end{pmatrix}$$

$\updownarrow$ 1-to-1 mapping

$$H_{matrix} = \begin{pmatrix} H11 & H12 & H13 \\ H21 & H22 & H23 \\ H31 & H32 & H33 \end{pmatrix}$$

Homography matrix
$\downarrow$

$$x = HX$$

2D
Image plane
(retina, film, canvas)

2D
World plane

# FIG. 1B

# FIG. 2

100

| 110 | 130 | 120 |
|---|---|---|
| IMAGE PROJECTOR | PROCESSOR | MEMORY |

# FIG. 3

START

PERFORM KEYSTONE CORRECTION BY PROJECTING TEST IMAGE TO SCREEN ~S310

IDENTIFY SCREEN-BASED COORDINATES CORRESPONDING TO EACH OF PLURALITY OF PIXELS INCLUDED IN TEST IMAGE BASED ON KEYSTONE CORRECTION ~S320

IDENTIFY SCREEN-BASED AREA CORRESPONDING TO EACH OF PLURALITY OF PIXELS BASED ON IDENTIFIED SCREEN-BASED COORDINATES ~S330

IDENTIFY REFERENCE PIXEL FROM AMONG PLURALITY OF PIXELS BASED ON SCREEN-BASED AREA CORRESPONDING TO EACH OF PLURALITY OF PIXELS ~S340

IDENTIFY BRIGHTNESS CORRECTING INFORMATION CORRESPONDING TO EACH OF PLURALITY OF PIXELS BASED ON SCREEN-BASED AREA OF IDENTIFIED REFERENCE PIXEL AND SCREEN-BASED AREA OF EACH OF PLURALITY OF PIXELS ~S350

END

# FIG. 4A

# FIG. 4B

411($C_1$)   412($C_2$)

413($C_3$)   414($C_4$)

# FIG. 5

# FIG. 6A

# FIG. 6B

$$\theta = \tan^{-1}\left(\frac{y}{z}\right)$$

Y: Y OUTPUT VALUE OF ACCELERATION SENSOR
Z: Z OUTPUT VALUE OF ACCELERATION SENSOR

# FIG. 7

# FIG. 8A

# FIG. 8B

FIELD OF
VIEW

LENS

IMAGING DEVICE

FOCAL DISTANCE

SHORT FOCAL DISTANCE
AND WIDE FIELD OF VIEW

FIELD OF
VIEW

LENS

IMAGING DEVICE

FOCAL DISTANCE

LONG FOCAL DISTANCE
AND NARROW FIELD OF VIEW

# FIG. 9

# FIG. 10

# FIG. 11

$e_1 \{X\ 0\ Y = 0\}$
$d_1 \{X = 200\ Y = 0\}$

$e_2 \{X = 1920\ Y = 0\}$
$d_2 \{X = 1919\ Y = 170\}$

CAMERA COORDINATE
SYSTEM
SCREEN-BASED
COORDINATE SYSTEM

1101

1102

$e_3 \{X = 190\ Y = 1079\}$
$d_3 \{X = 0\ Y = 1080\}$

$e_4 \{X = 1880\ Y = 950\}$
$d_4 \{X = 1920\ Y = 1080\}$

# FIG. 12

# FIG. 13

Area = 0.5a x d x sinA + 0.5 x b x c x sinC

# FIG. 14

START

IDENTIFY AREA IN WHICH FIRST TEST IMAGE PROJECTED
AT SCREEN ACCORDING TO KEYSTONE CORRECTION AND
SECOND TEST IMAGE PROJECTED AT SCREEN FROM EXTERNAL
PROJECTOR DEVICE ARE OVERLAPPED — S1410

IDENTIFY OVERLAP AREA IDENTIFIED ON SCREEN AS
PLURALITY OF VIRTUAL PIXEL AREAS — S1420

IDENTIFY PROJECTOR-BASED COORDINATES CORRESPONDING
TO EACH OF PLURALITY OF VIRTUAL PIXEL AREAS — S1430

IDENTIFY SCREEN-BASED COORDINATES CORRESPONDING TO
IDENTIFIED PROJECTOR-BASED COORDINATES — S1440

ACQUIRE THIRD BRIGHTNESS INFORMATION CORRESPONDING
TO EACH OF PLURALITY OF VIRTUAL PIXEL AREAS BASED
ON FIRST BRIGHTNESS INFORMATION CORRESPONDING TO
IDENTIFIED SCREEN-BASED COORDINATES AND SECOND
BRIGHTNESS INFORMATION CORRESPONDING TO EXTERNAL
PROJECTOR DEVICE — S1450

IDENTIFY FIRST BRIGHTNESS CORRECTING INFORMATION
CORRESPONDING TO EACH OF PLURALITY OF PIXELS
INCLUDED IN FIRST TEST IMAGE BASED ON FIRST
BRIGHTNESS INFORMATION AND THIRD BRIGHTNESS
INFORMATION — S1460

END

# FIG. 15

# FIG. 16

100'

```
           130
110~        |
  IMAGE PROJECTOR  ◄──►  ┌──────────┐  ◄──►  MEMORY   ~120
140~                     │          │
  COMMUNICATION   ◄──►    │PROCESSOR │  ◄──►  SENSOR   ~160
  INTERFACE               │          │
150~                     └──────────┘
  USER            ◄──►
  INTERFACE
```

## INTERNATIONAL SEARCH REPORT

| International application No. |
|---|
| **PCT/KR2024/012224** |

### A. CLASSIFICATION OF SUBJECT MATTER

**H04N 9/31**(2006.01)i

According to International Patent Classification (IPC) or to both national classification and IPC

### B. FIELDS SEARCHED

Minimum documentation searched (classification system followed by classification symbols)

H04N 9/31(2006.01); G03B 21/00(2006.01); G03B 21/14(2006.01); H04N 5/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프로젝터(projector), 스크린(screen), 키스톤(keystone), 보정 (correction), 테스트 영상(test image), 픽셀(pixel), 기준 좌표(reference coordinate), 기준 면적(reference area), 밝기 (brightness)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0166699 A (SAMSUNG ELECTRONICS CO., LTD.) 19 December 2022 (2022-12-19)<br>See claim 1. | 1-15 |
| A | KR 10-2006-0048392 A (SEIKO EPSON CORPORATION) 18 May 2006 (2006-05-18)<br>See claim 3. | 1-15 |
| A | JP 2011-188051 A (SEIKO EPSON CORP.) 22 September 2011 (2011-09-22)<br>See claims 1-6. | 1-15 |
| A | JP 2011-199626 A (SEIKO EPSON CORP.) 06 October 2011 (2011-10-06)<br>See claims 1-4. | 1-15 |
| A | JP 2003-319292 A (MITSUBISHI ELECTRIC CORP.) 07 November 2003 (2003-11-07)<br>See claims 1-3. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 December 2024** | **13 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 761 236 A1

**INTERNATIONAL SEARCH REPORT**
**Information on patent family members**

International application No.

**PCT/KR2024/012224**

| Patent document cited in search report | | | Publication date (day/month/year) | Patent family member(s) | | | Publication date (day/month/year) |
|---|---|---|---|---|---|---|---|
| KR | 10-2022-0166699 | A | 19 December 2022 | EP | 4300951 | A1 | 03 January 2024 |
| | | | | US | 2024-0015272 | A1 | 11 January 2024 |
| | | | | WO | 2022-260273 | A1 | 15 December 2022 |
| KR | 10-2006-0048392 | A | 18 May 2006 | EP | 1608160 | A1 | 21 December 2005 |
| | | | | EP | 1608160 | B1 | 14 August 2013 |
| | | | | JP | 2006-005534 | A | 05 January 2006 |
| | | | | US | 2005-0280780 | A1 | 22 December 2005 |
| | | | | US | 2008-0252860 | A1 | 16 October 2008 |
| | | | | US | 2010-0265469 | A1 | 21 October 2010 |
| | | | | US | 2012-0147337 | A1 | 14 June 2012 |
| | | | | US | 7401929 | B2 | 22 July 2008 |
| | | | | US | 7771055 | B2 | 10 August 2010 |
| | | | | US | 8142029 | B2 | 27 March 2012 |
| | | | | US | 8425047 | B2 | 23 April 2013 |
| JP | 2011-188051 | A | 22 September 2011 | US | 2011-0216983 | A1 | 08 September 2011 |
| | | | | US | 8885964 | B2 | 11 November 2014 |
| JP | 2011-199626 | A | 06 October 2011 | JP | 5348035 | B2 | 20 November 2013 |
| JP | 2003-319292 | A | 07 November 2003 | | None | | |

Form PCT/ISA/210 (patent family annex) (July 2022)